# EUROPÄISCHE PATENTSCHRIFT

(11) **EP 3 966 899 B1**
(45) Veröffentlichungstag und Bekanntmachung des Hinweises auf die Patenterteilung: **24.06.2026**
(21) Anmeldenummer: 20722319.9
(22) Anmeldetag: 29.04.2020
(51) Int. Cl.: H01R 4/02, B23K 20/10, H01R 4/20, H01R 4/18, B23K 20/12, B23K 20/227, B23K 20/233, B23K 20/24, H01R 4/62, H01R 43/02, H01R 101/00, H01R 11/11, B23K 101/38, B23K 103/04, B23K 103/10, B23K 103/12, B23K 103/18

(54) **ELEKTRISCHE ANSCHLUSSKONSOLE FÜR KFZ BORDNETZLEITUNG**
ELECTRICAL CONNECTION CONSOLE FOR A MOTOR-VEHICLE ELECTRICAL SYSTEM CONDUCTOR
CONSOLE DE RACCORDEMENT ÉLECTRIQUE POUR LIGNE DE RÉSEAU EMBARQUÉ DE VÉHICULE AUTOMOBILE

(30) Priorität: 10.05.2019 DE 102019112328
(43) Veröffentlichungstag der Anmeldung: 16.03.2022
(73) Patentinhaber: One Mobility Autokabel GmbH, 72793 Pfullingen (DE)
(72) Erfinder: SCHARKOWSKI, Oliver, 03172 Schenkendöbern OT Atterwasch (DE)
(74) Vertreter: Cohausz & Florack
(86) Internationale Anmeldenummer: PCT/EP2020/061854
(87) Internationale Veröffentlichungsnummer: WO 2020/229173

(56) Entgegenhaltungen:
- WO-A1-2015/036060
- DE-A1- 10 007 258
- DE-A1- 102006 050 708
- DE-A1- 102013 017 660
- DE-A1- 102013 017 660
- DE-A1- 102017 116 879
- DE-B3- 102013 101 876
- DE-B3- 102016 105 768
- DE-B3- 102017 106 742
- KR-A- 20170 042 167
- US-B2- 8 246 390
- US-B2- 8 288 653

## Beschreibung

Der Gegenstand betrifft eine elektrische Anschlusskonsole für eine Kraftfahrzeug-Bordnetzleitung umfassend ein Kabel mit einem metallischen Leiter und ein mit dem Leiter elektrisch und mechanisch verbundenen elektrischen Abgriff.

In einem Kraftfahrzeugbordnetz ist es notwendig, ausgehend von einem Hauptenergiestrang, der unmittelbar mit dem Pluspol der Batterie verbunden ist, elektrische Abgänge zu Verbrauchern zu realisieren. Aufgrund der Vielzahl der in einem Bordnetz anzuschließenden elektrischen Verbraucher ist eine weite Verzweigung der Bordnetzleitung erforderlich. Einige Verbraucher benötigen große Leistungen von der Batterie und müssen somit über Kabel mit großen Leitungsquerschnitten an das Verteilnetz angeschlossen werden. Gruppen von Verbrauchern müssen häufig über eine gemeinsame Sicherung abgesichert werden, andererseits ist es auch notwendig, ausgehend von der Hauptenergieleitung eine Mehrzahl von jeweils abgesicherten Leitungssträngen zur Verfügung zu stellen.

Der Abgriff elektrischer Energie vom Hauptenergiestrang ist nicht ohne Weiteres möglich. Zum Einen ist ein solcher Abgriff jeweils mit einem Übergangswiderstand und somit ohmschen Verlusten verbunden und zum Anderen besteht an den Abgriffen eine erhöhte Korrosionsgefahr.

Darüber hinaus ist bei der Verwendung von Aluminiumkabeln der elektrische Abgriff stets der Gefahr ausgesetzt, dass durch Oxidation des Aluminiumleiters der Übergangswiderstand groß wird und die elektrische Verlustleistung an diesem Übergangswiderstand zu einer ungewünschten Erwärmung der Leitung führt.

Aus der WO 2015/036060 A1 ist eine mehrstückige Hülsenanordnung aus longitudinalen Hülsen mit mehreren konzentrischen Schichten bekannt. In manchen Schichten sind transversale Ausnehmungen für radial verlaufende Befestigungsschrauben vorgesehen. Auf diese Weise lassen sich zwei Kabelenden verbinden, ein Abgriff wird hingegen nicht ermöglicht.

Eine longitudinale Hülse, in welcher radial verlaufende Gewinde Schrauben aufnehmen können, ist ebenfalls aus der KR 2017 0042167 A bekannt.

Aus der DE 10 2016 105768 B3 ist ein Abgriff von einem Flachleiter aus Vollmaterial in Form einer Hülse bekannt, welche senkrecht zur Hauptachse des Flachleiters mit diesem verschweißt ist. Dieser Abgriff eignet sich jedoch nicht für Litzenleiter.

Die DE 10 2013 017660 A1 beschreibt eine Kontaktstelle an einem abgeflachten Vollmaterialleiter, an welcher ein Anschlussteil angeschweißt wird. Auch dieses Verfahren lässt sich nicht ohne weiteres auf Litzenleiter übertragen.

In der DE 10 2013 101876 B3 ist eine stoffschlüssige Verbindung zwischen einem Litzenleiter und einem Anschlusselement offenbart, wobei der Leiter in eine longitudinale Hülse eingeführt und damit verschweißt wird. Mit dieser Methode lassen sich jedoch keine Mittenabgriffe realisieren.

US8246390B2 offenbart eine elektrische Verbindungsvorrichtung mit einem Leitungsdraht und einer leitfähigen Hülse. Dabei beschreibt US8246390B2 eine elektrische Verbindung, die einen leitfähigen Draht mit einem isolierten Abschnitt und einem nicht isolierten Abschnitt sowie eine leitfähige Hülse umfasst, die mindestens einen Teil des nicht isolierten Abschnitts abdeckt. Die leitfähige Hülse beinhaltet einen abgeflachten Abschnitt, der den nicht isolierten Abschnitt des Drahtes umhüllt und eine integrale leitfähige Struktur bildet.

US8288653B2 offenbart ein Verfahren zur Bildung eines Verbindungsknotens durch das Komprimieren und Verschweißen von Litzen innerhalb einer Hülse mittels Ultraschallschweißen.

Ausgehend von diesen Problemen lag dem Gegenstand die Aufgabe zu Grunde, eine elektrische Anschlusskonsole zur Verfügung zu stellen, mit welcher eine dezentrale Bordnetztopologie ermöglicht wird.

Diese Aufgabe wird durch eine elektrische Anschlusskonsole nach Anspruch 1 gelöst.

Insbesondere in Kraftfahrzeugbordnetzen, vorzugsweise in solchen, in denen die Batterie im Heck des Fahrzeugs und die Antriebsmaschine, insbesondere der Starter der Verbrennungsmaschine, aber auch ggf. ein Elektromotor für den Antrieb, im Motorraum angeordnet sind, verläuft der Hauptbatteriestrang vom Heck bis zur Front des Fahrzeugs. Dies kann durch eine Unterflurverlegung der Batterieleitung oder auch durch eine Innenraumverlegung der Batterieleitung erfolgen. Entlang dieses Batteriestrangs kann mit Hilfe der gegenständlichen Anschlusskonsole eine Mehrzahl von elektrischen Abgängen in besonders einfacher Weise realisiert werden.

Insbesondere wenn der Batteriestrang aus einem Aluminiumleiter, insbesondere einem Aluminiumlitzenleiter gebildet ist, ist es problematisch, Anschlusskonsolen an solchen Leitern anzuordnen. Mit Hilfe der gegenständlichen Lösung ist es möglich, in einem nicht isolierten Bereich, insbesondere in einem von den Leitungsenden entfernten Mittenbereich des Kabels, eine Hülse aufzubringen.

Das Kabel, an dem die Anschlusskonsole angeordnet wird, hat einen metallischen Litzenleiter als Kabelseele. Nachfolgend wird der Litzenleiter auch als Leiter bezeichnet.

Zur Kontaktierung mit einem Anschlussteil, z.B. einer Anschlussleitung, ist ein mit dem Litzenleiter elektrisch und mechanisch verbundener elektrischen Abgriff vorgesehen. Nachfolgend wird beispielhaft eine Anschlussleitung oder ein Bolzen als Anschlussteil beschrieben. Andere Anschlussteile sind ebenso möglich, insbesondere als Flachteile, Anschlussfahnen, Crimpanschlüsse oder dergleichen.

Der Abgriff ist aus einer metallischen Hülse gebildet ist die in einem Anschlussbereich des Leiters mit dem Leiter verbunden ist, wobei der Anschlussbereich zwischen den Enden des Kabels angeordnet ist.

Dabei hat das Kabel eine Längserstreckung, mithin hat der Litzenleiter ebenso eine Längserstreckung. Entlang dieser Längserstreckung ist die Hülse auf den Litzenleiter aufgebracht.

In der Hülse ist eine Ausnehmung vorgesehen, deren Längsachse quer zu Längsachse der Hülse verläuft.

Zur Kontaktierung mit einem Anschlussteil ist in der Ausnehmung eine Kontakthülse angeordnet ist.

Die Hülse ist bevorzugt im Anschlussbereich derart verpresst ist, dass sie zwei im Wesentlichen parallel zueinander verlaufende Kontaktflächen aufweist und dass die Ausnehmung zwischen den Kontaktflächen verläuft. Eine erste der Kontaktflächen kann als Auflage für die Kontakthülse, insbesondere deren Flansch dienen. Die zweite Kontaktfläche kann als Auflagefläche für eine Mutter, ein Anschlussteil oder dergleichen dienen.

Die Hülse wird dabei insbesondere als Splice um den nicht isolierten Bereich gelegt. Ist die Hülse als Splice gebildet, kann die Hülse als abgelängter Metallstreifen, abgelängtes Blech um die Litzenleitung gelegt ist oder von einem Endlosband um die Litzenleitung gelegt und anschließend abgelängt sein oder als ein- oder zweiteilige Hülse oder auch mehrteilige Hülse um die Litzenleitung gelegt sein.

Eine bevorzugte Geometrie der Hülse kann beispielsweise ein vorgefertigter, abgelängter Blechstreifen sein. Dieser kann um den Litzenleiter geschlagen werden. Auch ist es möglich, ein Endlosband, vorzugsweise ein Blechendlosband um den Litzenleiter zu schlagen und nach dem Umschlagen abzulängen. Die Hülse kann insbesondere als Bimetall-Blechstreifen oder Bimetall-Material gebildet sein.

Auch können Hülsenteile, insbesondere zwei oder mehrere Hülsenteile querschnittsgerecht für den Leiterquerschnitt des Litzenleiters vorgesehen sein. Insbesondere können diese einen Innenradius aufweisen, der dem Radius des Litzenleiters entspricht. Die Hülsenteile können auf den Litzenleiter positioniert werden und anschließend mit dem Litzenleiter stoffschlüssig, vorzugsweise mittels Schweißen, verbunden werden.

Auch ist es möglich, dass eine einteilige Hülse, bevorzugt mit rundem oder mehreckigen Innen und/oder Außenumfang um den Litzenleiter gesteckt und an der Fügestelle positioniert wird.

Eine Hülse kann, nachdem sie auf dem Litzenleiter positioniert wurde, mittels eines geeigneten Fügeverfahrens stoffschlüssig mit dem Litzenleiter gefügt werden. Insbesondere bietet sich Crimpen und/oder Ultraschallschweißen zum Fügen der Hülse auf dem Litzenleiter an.

Gemäß einem Ausführungsbeispiel wird vorgeschlagen, dass die Hülse um die Litzenleitung gecrimpt ist. Insbesondere kann die Hülse im Bereich einer Isolation des Kabels einen zu dem Außenumfang der Isolation korrespondierenden Innenumfang haben. Insbesondere kann die Hülse gasdicht an der Isolation angeordnet sein.

Auch kann die Hülse im Bereich der Litzenleitung zumindest einen nach außen weisenden, flachen Oberflächenbereich (Kontaktfläche) aufweisen, wobei in zumindest einem flachen Oberflächenbereich zumindest eine Naht der Hülse angeordnet sein kann. Beim Fügen der Hülse um die Litzenleitung entsteht vorzugsweise zumindest eine Naht. Diese Naht entfällt nur, wenn eine einteilige Hülse um die Litzenleitung gelegt wird. Die Naht ist vorzugsweise in einem Bereich angeordnet, der nach dem Fügen und/oder Verpressen flach ist, so dass in einem Schweißverfahren zum stoffschlüssigen Fügen der Hülse an den Litzen die Naht an dem flachen Oberflächenbereich besonders gut verschweißt werden kann.

Die Hülse wird zunächst lose um die Litzenleitung gelegt und mit Hilfe geeigneter plastischer Verformungsverfahren, wie beispielsweise Crimpen, zumindest formschlüssig mit der Litzenleitung verbunden. Dabei kann die Hülse verpresst werden.

Im Bereich der Isolation kann das Kabel einen größeren Durchmesser haben als die Litzenleitung. Bei dem Fügen der Hülse um das Kabel können dann unterschiedliche Innendurchmesser realisiert werden, indem die Hülse plastisch so verformt wird, dass sie mit einem größeren Innendurchmesser an der Isolation des Kabels anliegt, als der Innendurchmesser, der an der Litzenleitung anliegt.

Beim Verpressen der Hülse wird insbesondere der Außenumfang der Hülse umgeformt. Dadurch werden die geometrischen Voraussetzungen für eine vorzugsweise ebene Fläche auf dem Verbund zwischen dem Litzenleiter und der Hülse gebildet, so dass sich eine, bevorzugt zwei parallel zueinander verlaufende Kontaktflächen bilden. Die Innenkontur der Hülse oder die innere Profilierung der Hülse ist nach dem Verpressen vorzugsweise kongruent zu der Außenkontur oder dem Außenprofil des Litzenleiters im Bereich der entfernten Isolation sowie insbesondere auch zu der Außenkontur oder dem Außenprofil des Kabels im Bereich der Isolation. Bei dem Umformen der Hülse wird dieses vorzugsweise fest an die Isolation gedrückt, so dass vorzugsweise ein gasdichter Verbund zwischen der Innenwand der Hülse und der Außenwand der Isolation gebildet wird.

Bei der Verbindung wird die Hülse vorzugweise zunächst formschlüssig um den Litzenleiter gelegt und anschließend mit dem Litzenleiter verschweißt, insbesondere ultraschallverschweißt oder widerstandsverschweißt. Mit Hilfe der Schweißwerkzeuge, insbesondere mit Amboss und Sonotrode beim Ultraschallschweißen oder Elektroden beim Widerstandsschweißen lässt sich gleichsam ein Umformen als auch ein stoffschlüssiges Fügen zwischen Hülse und Litzenleitung realisieren. Dabei kann mit Hilfe der Werkzeuge zunächst ein Umformen der Hülse so erfolgen, dass ein Formschluss zwischen der Hülse und der Litzenleitung gebildet wird. Hierbei entsteht vorzugsweise eine unmittelbare Berührfläche zwischen der Hülse und der Litzenleitung, die eine Schweißebene zum Verschweißen der Hülse mit der Litzenleitung bildet. Nach oder während dieses Umformvorgangs kann das Verschweißen erfolgen, in dem Schweißenergie in die Schweißebene zwischen der Litzenleitung und der Hülse geleitet wird. Die Schweißebene ist vorzugsweise die äußere Mantelfläche der Litzenleitung und die innere Mantelfläche der Hülse, welche aneinander nach dem Umformen anliegen.

Das Umformen kann auch so erfolgen, dass nach dem Umformen das Querschnittsprofil der Hülse außen ein anders ist, als innen. Dass innere Querschnittsprofil der Hülse ist vorzugsweise kongruent zu der Litzenleitung oder dem Kabel und beispielsweise rund, wohingegen die Außenkontur oder das äußere Profil oder Querschnittsprofil der Hülse nach dem Umformen vorzugsweise kantig, insbesondere mehrkantig, beispielsweise sechskantig oder vierkantig sein kann. Diese Kantenform ist besonders geeignet zum Anlegen der Schweißwerkzeuge an den Außenumfang der Hülse.

Eine Naht der Hülse liegt dabei vorzugsweise im Bereich einer ebenen Fläche und nicht im Bereich einer Kante der mehrkantigen Form der Hülse. Dies stellt sicher, dass beim Schweißen die Naht sicher verschweißt wird. Insbesondere ist die nach dem Umschlagen oder dem Fügen der Hülse an der Hülse entstehende Naht an derjenigen Außenfläche, an welcher die Schweißwerkzeuge angreifen. Schweißenergie kann in die Schweißebene zwischen dem Hülse und der Litzenleitung eingebracht werden und gleichzeitig kann die Schweißenergie in die Nahtstelle eingebracht werden. Somit kann in einem einzigen Schweißvorgang die Hülse entlang ihrer Naht und gleichzeitig die Hülse mit dem Litzenleiter verschweißt werden.

Es ist erkannt worden, dass beim Schallschweißen mit geometrisch angepassten Schweißwerkzeugen, insbesondere Sonotrode und Amboss, zunächst die Hülse formschlüssig um die Litzenleitung plastisch geformt werden kann und anschließend stoffschlüssig mit dieser verbunden werden kann. Im Anschluss oder während des Umformvorgangs kann das Verschweißen erfolgen. Aufgrund des Umformens und Fügens mit einem Werkzeug ist eine hohe Taktzeit bei einer gleichzeitig einfachen und robusten Anlagentechnik ermöglicht. Es sind nur wenige Prozessparameter einzustellen und der Prozess kann wirtschaftlich durchgeführt werden. Das Schweißen kann ein Ultraschallschweißen, ein Widerstandsschweißen oder ein Magnetimpulsschweißen sein.

Auch ist es möglich, zunächst ein Crimpverfahren vorzusehen, um die Hülse auf die Litzenleitung formschlüssig zu fügen und anschließend mit einem Schweißverfahren die Hülse mit dem Litzenleiter stoffschlüssig zu verbinden. Bei diesem stoffschlüssigen Verbinden kann eine Oxidschicht auf der Litzenleitung und/oder der Hülse aufgebrochen werden.

Wie bereits erläutert, kann die Hülse um die Litzenleitung gelegt werden. Beim anschließenden formschlüssigen Fügen der Hülse auf die Litzenleitung kann zumindest die Hülse, vorzugsweise auch die Litzenleitung, plastisch verformt werden, um so einerseits eine gute mechanische Verbindung zwischen der Litzenleitung und der Hülse entlang des Innenumfangs der Hülse zu gewährleisten und gleichzeitig beispielsweise die Hülse an ihrem Außenumfang für ein anschließendes Verbinden mit einer Kontakthülse plastisch zu formen. Hierbei können insbesondere auf der Außenseite der Hülse ebene Schweißflächen gebildet werden, entlang derer die Schweißwerkzeuge besonders gut sowohl ein Verschweißen der Hülse mit der Litzenleitung ermöglichen, als auch ein anschließendes Verschweißen der Hülse mit der Kontakthülse.

Die Hülse wird, wie erläutert, um die Litzenleitung gelegt. Die Hülse ist dabei vorzugsweise bereits abgelängt oder wird nach dem Umlegen abgelängt. Die Naht kann dann ein Stumpfstoß oder ein Überlappstoß sein. Die Verschweißung erfolgt dann derart, dass die Schweißwerkzeuge auf die Naht des Stumpfstoßes oder des Überlappstoßes, der vorzugsweise zunächst plastisch verformt wurde, gelegt wird, um dann entlang dieser Naht sowohl die Naht als auch die Hülse mit der Litzenleitung zu verschweißen. Hierbei können Ultraschallschweißwerkzeuge als auch Widerstandsschweißwerkzeuge oder Magnetimpulsschweißwerkzeuge zum Einsatz kommen.

Gegenständlich ist es möglich, eine der Litzenleitung zugewandte Innenseite der Hülse unmittelbar mit der Litzenleitung zu verbinden und eine der Litzenleitung abgewandte Oberfläche der Hülse mit einer Kontakthülse zu verbinden.

Dabei ist die Hülse mit ihren bevorzugt zwei unterschiedlichen Oberflächen derart gebildet, dass die Gefahr der Kontaktkorrosion in der gesamten Verbindung gegenüber herkömmlichen Verbindungen reduziert ist.

Dabei ist es möglich, die Litzenleitung, die aus einem ersten Metallwerkstoff gebildet ist, zunächst mit einer ersten metallischen Oberfläche der Hülse in Kontakt zu bringen. Die Hülse hat eine zweite metallische Oberfläche, die aus einem zweiten, zu dem ersten Metallwerkstoff verschiedenen Metallwerkstoff gebildet ist. Diese zweite Oberfläche kommt vorzugsweise nicht in Kontakt mit der Litzenleitung.

In der Ausnehmung der Hülse ist eine Kontakthülse angeordnet.

Über die Kontakthülse kann ein Kontakt zwischen einem Anschlussteil z.B. einer Anschlussleitung und der Litzenleitung erfolgen. Auch die Kontakthülse kann aus zwei metallischen Oberflächen gebildet sein. Dabei kann das für das Material der Hülse nachfolgend gesagte für die Kontakthülse ebenso gelten. Die Kontakthülse kann in einem ersten Abschnitt aus dem Werkstoff der Litzenleitung gebildet sein und in einem zweiten Abschnitt aus dem Werkstoff der Hülse im Bereich der Kontaktfläche. Die Kontakthülse kann auch entsprechend beschichtet sein.

Litzenleitung und Anschlussteil sind vorzugsweise aus unterschiedlichen Metallwerkstoffen. Durch den Übergang der Metallwerkstoffe im Bereich der Hülse/Kontakthülse besteht kein unmittelbarer Kontakt der unterschiedlichen Metalle von Anschlussteil und Litzenleitung miteinander. Der metallische Übergang zwischen dem ersten Metallwerkstoff und dem zweiten Metallwerkstoff an der Hülse/Kontakthülse kann ausreichend gegenüber Kontaktkorrosion geschützt werden. Das Anschlussteil kann insbesondere eine Litzenleitung oder einen Flachleitung aus Vollmaterial sein. Das Anschlussteil kann auch ein Anschlussbolzen oder ein Crimpanschluss oder eine Anschlussfahne sein.

Auch ist es möglich, dass der jeweilige Übergang zwischen jeweils zwei metallischen Werkstoffen mit einer derart geringen Standardpotentialdifferenz gebildet ist, dass die Gefahr der Kontaktkorrosion verringert ist. Die Standardpotentialdifferenz zwischen dem Metallwerkstoff der Litzenleitung und dem Metallwerkstoff der ersten Oberfläche der Hülse/ der Oberfläche des ersten Abschnitts der Kontakthülse kann einen ersten Betrag haben. Die Standardpotentialdifferenz zwischen dem ersten Metallwerkstoff der Hülse / der Kontakthülse und dem zweiten Metallwerkstoff der Hülse/ der Kontakthülse kann einen zweiten Betrag haben. Die Oberfläche des zweiten Abschnitts der Kontakthülse kann aus einem gleichen Werkstoff gebildet sein, wir der Werkstoff der zweiten Oberfläche (der Kontaktfläche) der Hülse.

Die Standardpotentialdifferenz zwischen dem zweiten Metallwerkstoff der Kontakthülse und dem Metallwerkstoff des Anschlussteils kann einen dritten Betrag haben. Der erste, zweite und dritte Betrag der Standardpotentialdifferenz kann jeweils kleiner sein, als die Standardpotentialdifferenz zwischen dem Metallwerkstoff der Litzenleitung und dem Metallwerkstoff des Anschlussteils.

Insbesondere ist der erste, zweite und/oder dritte Betrag der Standardpotentialdifferenz kleiner 2V, vorzugsweise kleiner 1V. Somit wird erreicht, dass an keinem metallischen Übergang eine Standardpotentialdifferenz von größer 2V, vorzugsweise 1V anliegt, wodurch die Kontaktkorrosion möglichst gering gehalten wird.

Auch kann es sinnvoll sein, dass der zweite Betrag der Standardpotentialdifferenz, also zwischen dem ersten Metallwerkstoff der Hülse/Kontakthülse und dem zweiten Metallwerkstoff der Hülse/Kontakthülse größer ist, als der erste Betrag der Standardpotentialdifferenz und der dritte Betrag der Standardpotentialdifferenz.

Insbesondere kann der zweite Betrag der Standardpotentialdifferenz größer 1,5 V sein. An den Übergängen zwischen dem ersten Metallwerkstoff und der Litzenleitung oder dem zweiten Metallwerkstoff und dem Metallwerkstoff des Anschlussteils kann dagegen der erste und dritte Betrag der Standardpotentialdifferenz kleiner 1,5 V sein. Somit wird an den unmittelbaren Kontaktstellen zwischen der Hülse/Kontakthülse und der Litzenleitung oder der Hülse/Kontakthülse und des Anschlussteils das Kontaktkorrosionspotential reduziert.

Im Bereich der Hülse/Kontakthülse ist das Kontaktkorrosionspotential erhöht. Da die Hülse/Kontakthülse jedoch besonders gegenüber Kontaktkorrosion gesichert werden kann, insbesondere gegenüber Eindringen von Feuchtigkeit, kann das Gesamtrisiko der Korrosion der Verbindung reduziert werden.

Das Standardpotential der verschiedenen Werkstoffe wird vorzugsweise bei Standardbedingungen gemessen, insbesondere 25° C, 101,3 kPa, ph=0 und einer Ionenaktivität von 1 mol/l. Auch wird vorzugsweise eine Normalwasserstoffelektrode bei Standardbedingungen verwendet, um das jeweilige Standardpotential eines Werkstoffs zu bestimmen. Die Differenz der Standardpotentiale wird anschließend anhand der Potentiale der jeweiligen Halbzellen (Werkstoff zu Normalwasserstoffelektrode) bestimmt.

Gemäß einem Ausführungsbeispiel wird vorgeschlagen, dass der Betrag der Standardpotentialdifferenz zwischen dem ersten Metallwerkstoff und dem zweiten Metallwerkstoff größer 1V, vorzugsweise größer 1,5V ist. Auch kann der Betrag der Standardpotentialdifferenz zwischen dem ersten Metallwerkstoff und dem zweiten Metallwerkstoff kleiner 2,5V betragen. Die hohe Standardpotentialdifferenz am Übergang zwischen dem erste Metallwerkstoff und dem zweiten Metallwerkstoff ist gewollt, da die Hülse/Kontakthülse gegenüber Eindringen von Feuchtigkeit im Bereich der Naht oder des Übergangs zwischen den beiden metallischen Oberflächen geschützt sein kann.

Die Hülse/Kontakthülse kann bimetallisch, d.h. aus zumindest zwei unterschiedlichen Metallwerkstoffen gebildet sein. Hierbei kann ein Bimetall-Blechstreifen oder eine bimetallische Beschichtung in der Hülse/Kontakthülse gebildet sein. Dabei kann beispielsweise ein Trägermaterial oder ein Trägerwerkstoff vorgesehen sein und ein metallischer Beschichtungswerkstoff. Das Trägermaterial oder der Trägerwerkstoff kann walzplattiert mit dem Beschichtungsmaterial oder dem Beschichtungswerkstoff sein.

Gemäß einem Ausführungsbeispiel kann die Hülse/Kontakthülse aus einem metallischen Trägerwerkstoff und einem metallischen Beschichtungswerkstoff gebildet sein. Der Trägerwerkstoff kann den ersten Metallwerkstoff bilden und der Beschichtungswerkstoff kann den zweiten Metallwerkstoff bilden. Auch ist es möglich, dass der Trägerwerkstoff den zweiten Metallwerkstoff bildet und der Beschichtungswerkstoff den ersten Metallwerkstoff bildet. Die Litzenleitung kann aus einem Metallwerkstoff, insbesondere dem ersten oder dem zweiten Metallwerkstoff gebildet sein.

Es ist insbesondere denkbar, Kupfer- oder Aluminiumwerkstoffe als Trägerwerkstoff zu benutzen und beispielsweise Nickel als Beschichtungswerkstoff zu benutzen. Auch ist eine allseitige Beschichtung der Hülse/Kontakthülse mit Nickel denkbar. Auch ist es denkbar, Messing als Trägerwerkstoff zu verwenden. An einem Übergang zwischen den Trägerwerkstoff und Beschichtungswerkstoff kann beispielsweise eine zusätzliche Beschichtung, insbesondere eine metallische Beschichtung, beispielsweise aus Nickel vorgesehen sein.

Die gegenständliche Anschlusskonsole eignet sich insbesondere für Energieleitungen oder Batterie-, Starter- und/oder Generatorleitungen, insbesondere in Kraftfahrzeugen. Solche Leitungen haben eine hohe Stromtragfähigkeit und sind beispielsweise geeignet, mehrere 100 A über einen längeren Zeitraum zu tragen. Daher sind Leitungsquerschnitte von größer 50 mm² für die Litzenleiter vorgeschlagen. Andererseits ist der Leitungsquerschnitt der Litzenleiter vorzugsweise kleiner als 200 mm². Diese genannten Litzenleitungen eignen sich insbesondere für den Einsatz in automotiven Anwendungen, wie sie gegenständlich auch beansprucht sind.

Insbesondere ist die Litzenleitung eine Energieleitung in einem Kraftfahrzeug, die beispielsweise als Batterieleitung, Starter-Generatorleitung, Batterie-Starterleitung, Generator-Batterieleiter oder dergleichen gebildet sein kann. Auch kann die Litzenleitung als Energy Backbone in einem Kraftfahrzeug verbaut sein und ausgehend hiervon können verschiedenste Abgänge zu verschiedensten Verbrauchern realisiert sein. Auch kann die Anschlussleitung als Batterieleitung, Starter-Generatorleitung, Batterie-Starterleitung, Generator-Batterieleiter oder dergleichen gebildet sein kann. Auch kann die Anschlussleitung als Energy Backbone in einem Kraftfahrzeug verbaut sein und ausgehend hiervon können verschiedenste Abgänge zu verschiedensten Verbrauchern durch die Litzenleitung realisiert sein. Die Anschlussleitung kann dabei insbesondere eine Flachleitung sein. Eine Flachleitung ist dabei aus einem Vollmaterial einstückig gebildet.

Gemäß einem Ausführungsbeispiel ist der Litzenleiter in einem Kabel mit einer Isolation geführt. Vorzugsweise ist das Kabel gespleißt, so dass in einem Mittenbereich zwischen zwei isolierten Außenbereichen die Isolation von dem Litzenleiter entfernt ist. Beidseitig des nicht isolierten Bereiches kann das Kabel mit einer Isolation umgeben sein. Auch ist es möglich, dass der Litzenleiter in einem Bereich eines stirnseitigen Endes abisoliert ist. In dem abisolierten Bereich lässt sich die gegenständliche Anschlusskonsole realisieren.

Die Hülse wird bevorzugt stoffschlüssig mit dem Litzenleiter verbunden. Außerdem wird die Hülse bevorzugt verpresst. Durch das Verpressen kann ein Kraftschluss und/oder ein Formschluss zwischen dem Leiter und der Hülse gebildet werden. Die Hülse kann in der Form eines Crimpkontakts mit dem Leiter verbunden werden. Hierzu wird die Litzenleiter in Längsrichtung in die Hülse eingelegt.

Anschließend erfolgt das Vercrimpen des Leiters mit der Hülse durch einen Crimpstempel und einen Amboss. Das Vercrimpen erfolgt bevorzugt durch ein Crimpwerkzeug. Im Oberteil des Crimpwerkzeugs ist der Crimpstempel und im Unterteil der Amboss montiert. Die Hülse wird zusammen mit dem Leiter auf den Amboss aufgesetzt und der Crimpstempel führt eine plastische Verformung der Hülse im Bereich des Leiters derart aus, dass der Leiter form- und kraftschlüssig in der Hülse gehalten ist.

Anschließend oder beim Verpressen kann die Hülse mit dem Leiter stoffschlüssig gefügt werden. Hierbei kann ein Verschweißen erfolgen. Das Verschweißen kann ein Widerstandsschweißen, ein Magnetimpulsschweißen oder ein Reibschweißen, insbesondere ein Ultraschallschweißen sein.

Durch ein Anregen mit einer Hochfrequenzschwingung während des Vercrimpens können sowohl die mechanischen als auch die elektrischen Eigenschaften der Verbindung verbessert werden. Beispielsweise bei der Verwendung eines Aluminiumlitzenleiters lässt sich durch die Hochfrequenzschwingung, die isolierende Aluminiumoxidschicht von dem Leiter aufbrechen.

Die hohen Kräfte, die bei einem herkömmlichen Crimpvorgang aufgebracht werden müssen, können drastisch reduziert werden, wenn der Crimpstempel und/oder Crimpamboss beim Crimpvorgang mit einer hochfrequenten Schwingung angeregt werden. Dabei erfolgt während des Crimpens, also gleichzeitig, die hochfrequente Anregung. Es wird nicht erst gecrimpt und danach mit einer hochfrequenten Schwingung angeregt, sondern die Schwingung wird beim Crimpvorgang eingebracht.

Auch wird durch die Hochfrequenzschwingung erreicht, dass sich das Relaxationsvermögen des Leiters verändert und nach dem abgeschlossenen Crimpvorgang kein Kriechen mehr einsetzt. Das Aufbrechen der Oxidschicht führt zu einer verbesserten elektrischen Verbindung und das veränderte Relaxationsvermögen zu einer langzeitstabilen mechanischen Verbindung. Durch die Schwingung wird ein Stoffschluss zwischen den Litzen untereinander und zur Hülse bewirkt. Dadurch wird ein Kriechen verhindert.

Gemäß einem Ausführungsbeispiel wird vorgeschlagen, dass die Hochfrequenzschwingung eine Ultraschallschwingung ist und insbesondere dass während des Vercrimpens der Amboss und/oder der Crimpstempel mit Ultraschallenergie angeregt wird. Der Crimpstempel und/oder Amboss steht mit einem Ultraschallbooster mechanisch in Kontakt, so dass der Crimpstempel und/oder Amboss die Ultraschallenergie auf die Hülse samt Leiter einbringen kann. Durch das Einbringen der Ultraschallschwingung wird besonders gut die Oxidschicht auf der Oberfläche des Leiters und/oder auf der Oberfläche der Hülse aufgebrochen.

Gemäß einem Ausführungsbeispiel wird vorgeschlagen, dass die Ultraschallenergie geringer ist, als eine zum Ultraschallverschweißen des Leiters mit der Hülse benötigte Schweißenergie. Zum Verschweißen der Hülse mit dem Leiter muss an die Fügestelle eine ausreichende Energie eingebracht werden, dass beide Fügepartner aufschmelzen. Es ist jedoch möglich, dass die Ultraschallenergie unterhalb der benötigten Schweißenergie zum Verschweißen zwischen Leiter und der Hülse liegt. Dies führt zu kürzeren Taktzeiten und zu geringeren Anforderungen an den Ultraschallgenerator, so dass die Verbindungstechnik kostengünstiger ist, als ein Ultraschallverschweißen. Ein leichter oberflächlicher Stoffschluss zwischen der Hülse und den Litzen des Leiters kann dabei umfasst sein. Dabei müssen die Fügepartner aber nicht immer aufschmelzen, um einen Stoffschluss zu erzeugen. Es kann bereits zu einem Stoffschluss kommen, wenn die Fügepartner durch Reiben plastisch werden und so einen Stoffschluss erzeugen.

Gemäß einem Ausführungsbeispiel wird vorgeschlagen, dass der Leiter als Aluminiumlitzenleiter oder Kupferlitzenleiter bereitgestellt wird. Insbesondere bei der Verwendung eines Aluminiumlitzenleiters ergeben sich besondere Vorteile durch das Einbringen der Hochfrequenzschwingung. Wie bereits erwähnt, wird das Relaxationsvermögen des Aluminiumlitzenleiters beim Einbringen der Hochfrequenzschwingung derart beeinflusst, dass nach dem abgeschlossenen Crimpvorgang kein oder nur verringertes Kriechen des Litzenleiters einsetzt. Auch führt das Einbringen der Hochfrequenzschwingung zu einem Aufbrechen des Aluminiumoxids auf der Oberfläche des Aluminiumlitzenleiters. Die Litzen werden durch die Schwingung so aneinander gepackt, dass Lufteinschlüsse im Fügebereich nahezu vermieden werden können. Somit ist der Fügebereich Gasdicht und es kann sich keine neue Oxidschicht bilden.

Außerdem lässt sich die Energie der Hochfrequenzschwingung an den Kabelquerschnitt der jeweiligen Leitung anpassen. Die Kraft, mit der der Crimpstempel auf den Amboss gepresst wird, als auch die Schwingungsenergie lassen sich sehr definiert einstellen, so dass abhängig vom Querschnitt der jeweiligen Leiter ein unterschiedlicher Prozessparameter (Anpresskraft, Schwingungsenergie) eingestellt werden kann, um eine langzeitstabile, elektrisch gut leitende, formschlüssige Verbindung zu erhalten.

Auch bei der Verwendung von Kupferlitzenleitern wird durch das Einbringen der Hochfrequenzenergie der Übergangswiderstand zwischen der Hülse und dem Leiter gegenüber herkömmlichen Verfahren verringert. Somit lässt sich das gegenständliche Verfahren für verschiedene Arten von Litzenleitern verwenden.

Durch das Einbringen der Schwingungsenergie mittels Hochfrequenzschwingung wird erreicht, dass während der Vercrimpens die einzelnen Litzen des Litzenleiters verdichtet werden. Somit entsteht ein vorzugsweise hohlraumfreies Bündel an Litzen des Litzenleiters im Bereich des Anschlusses, welches vercrimpt wird. Nach dem abgeschlossenen Crimpvorgang ist im Bereich der Litzen ein weitestgehend gasdichtes Bündel vorhanden, so dass Luftsauerstoff nicht mehr zu einer Oxidation zwischen den Litzen im Bereich des Bündels führen kann. Das Innere der Verbindung, also insbesondere die Verbindung zwischen den Litzen selbst, kann so vor Korrosion geschützt sein und es wird verhindert, dass sich neue, isolierende Oxidschichten bilden.

Die Schweißenergie kann ausreichend sein, die Litzen des Litzenleiters untereinander zu verschweißen. Insbesondere die umlaufenden, peripheren Litzen des Litzenleiters können miteinander verschweißt werden. Dies ist insbesondere dann der Fall, wenn der Schmelzpunkt des Materials des Litzenleiters unter dem Schmelzpunkt des Materials der Hülse liegt. Durch die oberflächliche Verbindung der Litzen miteinander wird ein guter elektrischer Kontakt zwischen den Litzen gewährleistet. Auch wird verhindert, dass sich nach dem Crimpvorgang zwischen den Litzen des Litzenleiters Oxidschichten bilden oder Korrosion auftreten kann.

Die Hochfrequenzschwingung liegt insbesondere in einem Frequenzbereich zwischen 20 kHz und 70 kHz. Bevorzugt ist jedoch der Frequenzbereich um die 20 kHz, also zwischen 20 und 30 kHz.

Während des Vercrimpens wird die Hülse durch den Crimpstempel verformt. Die benötigte Crimpkraft wird durch den Crimpstempel auf die Hülse aufgebracht. Dadurch, dass während des Vercrimpens jedoch zusätzlich Hochfrequenzschwingung eingebracht wird, sind die Crimpkräfte geringer als bei herkömmlichen Crimpverfahren. Durch den Crimpstempel und/oder den Amboss des Crimpwerkzeugs wird eine hochfrequente Schwingung in den Werkstoff der Hülse und der Litzen eingebracht, die dazu führt, dass dieser sich leichter umformen lässt als ein nicht angeregter Werkstoff. Das hochfrequenzbegleitete Umformen beim Crimpvorgang hat den Vorteil, dass die aufzubringenden Crimpkräfte geringer sind, als bei herkömmlichen Crimpverfahren.

Da während des Vercrimpens durch die Hochfrequenzschwingung bereits Schwingungsenergie in die Verbindung eingebracht wird, ist es möglich, diese Schwingungsenergie, während und/oder nach dem Vercrimpen zu verwenden, um ein Lot aufzuschmelzen und in die Crimpverbindung zwischen Hülse und Litzen und/oder den Litzen untereinander einzubringen. Zwar ist die Energie ggf. zu gering, den Leiter mit der Hülse zu verschweißen, jedoch heizt sich der Leiter durch die Schwingungsenergie derart auf, dass während und/oder unmittelbar nach dem Vercrimpen eine ausreichende Temperatur vorhanden ist, um ein Lot aufzuschmelzen. Das aufgeschmolzene Lot fließt dann in noch gegebenenfalls vorhandene Zwischenräume zwischen den Litzen als auch zwischen den Litzenleiter und die Hülse und führt somit zu einer weiteren Verbesserung der Langzeitstabilität. Durch die Schwingung entsteht eine Art Saugwirkung, die das Lot in noch vorhandene Zwischenräume zieht.

Insbesondere wird vorgeschlagen, zunächst mit einer ersten Crimpkraft den Crimpstempel auf den Amboss abzusenken und somit den Leiter mit der Hülse zu vercrimpen. Hierbei wird gleichzeitig die Hochfrequenzschwingung in die Verbindungsstelle eingeleitet. Nachdem Abschluss des Vercrimpens kann die erste Crimpkraft zwischen Crimpstempel und Amboss verringert werden, so dass eine zweite Crimpkraft ausreichend groß ist, dass eine Hochfrequenzschwingung in die Verbindungsstelle eingeprägt werden kann. Die erste Crimpkraft und/oder die Energie der Hochfrequenzschwingung kann nach dem ersten Vercrimpen verringert werden. Insbesondere wird vorgeschlagen, dass die Energie der Hochfrequenzschwingung ausreichend hoch ist, die Kontaktstelle über den Schmelzpunkt des Lots aufzuheizen und somit das Lot aufzuschmelzen. Durch die Hochfrequenzanregung wird erreicht, dass das Lot besonders gut in gegebenenfalls noch vorhandene Zwischenräume fließt. Insbesondere bei dem Vercrimpen von Leitern mit kleinen Querschnitten ist die benötigte Crimpkraft als auch die Energie der Hochfrequenzschwingung gegebenenfalls nicht ausreichend, die Verbindung über den Schmelzpunkt des Lots aufzuheizen. Dann wird während des Aufbringens der zweiten Crimpkraft noch weitere Schwingungsenergie in die Verbindung eingebracht, bis diese ausreichend aufgeheizt ist, dass das aufgebrachte Lot schmilzt.

In die Hülse wird eine Ausnehmung eingebracht, die insbesondere durchgehend durch den Leiter und die Wände der Hülse verläuft. Die Ausnehmung kann dabei durch Bohren gebildet werden. Auch kann die Ausnehmung mittels Stanzen und die Hülse und den Leiter eingebracht werden. Die Ausnehmung verläuft quer zur Längsachse der Hülse. Insbesondere verläuft die Längsachse der Ausnehmung quer, insbesondere senkrecht zur Längsachse der Hülse.

In eine solche Ausnehmung kann eine Kontakthülse eingesetzt werden. Diese Kontakthülse ist mit der Hülse und mit dem Litzenleiter stoffschlüssig, insbesondere mittels Reibschweißen verbunden.

Die Kontakthülse weist eine Durchgangsöffnung auf, in der ein Anschlussbolzen oder eine Schraube angeordnet werden kann. Hierüber kann dann einen Kontaktierung mit einem weiteren Anschlussleiter erfolgen.

Die Ausnehmung ist vorzugsweise eine Bohrung. Die Bohrung kann zylindrisch sein oder kegelstumpfförmig. Die Bohrung ist vorzugsweise angepasst an die in die Durchgangsöffnung eingefügte Kontakthülse.

Um eine Verbindung zwischen einem elektrischen Leiter und einem Anschlussteil, beispielsweise einem Bolzen, insbesondere einer Schraube oder dergleichen zu ermöglichen, wird vorgeschlagen, dass eine an oder in der Ausnehmung angeordnete Kontakthülse vorgesehen ist. Durch eine stoffschlüssige Verbindung der Kontakthülse im Bereich der Ausnehmung mit dem Leiter ist eine sichere Kontaktierung an dem Leiter gewährleistet. Die Kontakthülse bietet eine ausreichende gute Auflagefläche für eine Verbindung mit einem elektrischen Abgang, beispielsweise in Form eines Bolzens. Auch kann eine stoffschlüssige Verbindung zwischen der Kontakthülse und der Hülse im Bereich einer Kontaktfläche der Hülse erfolgen.

Das Anbringen der Kontakthülse an der Ausnehmung ist jedoch prozeßtechnisch anspruchsvoll. Beim Verschweißen muss die Kontakthülse sowohl mit einem ausreichend großen Anpressdruck gegen die Hülse gepresst werden und gleichzeitig in Rotation versetzt werden. Ein Reibschweißwerkzeug muss dabei während es rotiert und die Kontakthülse in Rotation versetzt, die Kontakthülse auch noch gleichzeitig gegen den Leiter und/oder die Hülse pressen.

Es hat sich herausgestellt, dass die elektrische Kontaktierung eines elektrischen Abgangs an der Kontakthülse auch dann ausreichend gut ist, wenn der hierfür notwendige Bolzen nicht unmittelbar an dem Innenumfang der Hülse anliegt. Es reicht aus, wenn ein Bolzenkopf stirnseitig an der Hülse anliegt. Dann ist ein ausreichend guter elektrischer Kontakt möglich. Auf der anderen Seite führt dies dazu, dass zwischen der Durchgangsöffnung in der Kontakthülse bzw. der inneren Mantelfläche der Durchgangsöffnung in der Kontakthülse und der äußeren Form des Bolzens weder Formschluss notwendig ist, noch müssen die Querschnitte komplementär zueinander sein. Vielmehr ist erkannt worden, dass es für den Herstellungsprozess vorteilhaft ist, wenn in der Kontakthülse eine Durchgangsöffnung vorgesehen ist, die als Innenmehrkant gebildet ist. Der Innenumfang der Durchgangsöffnung ist mehrkantig gebildet. Auf der anderen Seite ist der Außenumfang der Kontakthülse vorzugsweise im Wesentlichen rund, so dass die Kontakthülse in der Ausnehmung gedreht werden kann. Hierdurch kann die Kontakthülse mit den Litzen mittels Drehbewegung verschweißt werden.

Der Innenumfang der Ausnehmung in der Hülse und dem Leiter ist im Wesentlichen kongruent zu dem Außenumfang der Kontakthülse. Dahingegen kann der Innenumfang der Durchgangsöffnung in der Kontakthülse mehrkantig gebildet und weder kongruent zu deren Außenumfang noch kongruent noch zu einem in die Durchgangsöffnung der Kontakthülse einsteckbaren Bolzen sein. Es ist jedoch auch möglich, dass der der Innenumfang der Durchgangsöffnung in der Kontakthülse rund gebildet ist und/oder kongruent zu deren Außenumfang und/oder zu einem in die Durchgangsöffnung der Kontakthülse einsteckbaren Bolzen ist.

Eine besonders gute Befestigung der Kontakthülse an der Ausnehmung ist dann möglich, wenn die Kontakthülse einen radial nach außen weisenden Kragen aufweist. Dieser Kragen kann als Flansch gebildet sein. Dieser Kragen kann vorzugsweise dadurch gebildet sein, dass die Kontakthülse aus zumindest zwei Abschnitten gebildet ist. Die beiden Abschnitte erstrecken sich in axialer Richtung der Durchgangsöffnung der Kontakthülse nebeneinander. Ein erster Abschnitt hat dabei einen ersten Umfang und ein zweiter Abschnitt hat dabei einen zweiten, größeren Außenumfang als der erste Außenumfang. Der zweite Abschnitt kann somit radial nach außen gegenüber dem ersten Abschnitt auskragen. Beim Befestigen der Kontakthülse an der Ausnehmung wird die Kontakthülse vorzugsweise mit dem ersten Abschnitt in die Ausnehmung eingesteckt. Der zweite Abschnitt führt dazu, dass die Einstecktiefe der Kontakthülse in der Ausnehmung begrenzt ist, da der zweite Abschnitt einen Anschlag bildet.

Nachdem die Kontakthülse in die Ausnehmung eingesteckt wurde, kann der Reibschweißvorgang beginnen. Beim Reibschweißvorgang wird die Kontakthülse vorzugsweise im Bereich der Berührfläche zwischen der Hülse und dem zweiten Abschnitt mittels Reibschweißen verschweißt. Durch einen Anpressdruck auf die Kontakthülse wird der zweite Abschnitt gegen die Oberfläche der Hülse gepresst. Es ist erkannt worden, dass gerade in diesem Bereich die größte Schweißenergie auftritt und insbesondere dieser Bereich zuerst mittels Reibschweißen verschweißt werden wird.

Auch ist es möglich, dass die Kontakthülse in die Ausnehmung eingesteckt wird und mit der Hülse und/oder dem Leiter mittels Widerstandsschweißen verschweißt wird. Auch ist es möglich, dass die Kontakthülse in die Ausnehmung eingesteckt wird und mit der Hülse mittels Magnetimpulsschweißen verschweißt wird

Der zweite Abschnitt ist vorzugsweise als Flansch gebildet und dient einerseits als Anlagefläche an der Hülse und andererseits als vergrößerte Auflagefläche für ein Anschlussteil. Ein Kopf eines Anschlussbolzens oder eine an dem Anschlussbolzen verschraubte Mutter oder eine Unterlegscheibe kann an der der Hülse abgewandten Oberfläche des Flansches aufliegen.

Es hat sich herausgestellt, dass es besonders vorteilhaft ist, wenn der erste und der zweite Abschnitt einstückig gebildet sind. Insbesondere kann die Kontakthülse als Stanz- oder Drehteil gebildet sein. Durch die Einstückigkeit wird vermieden, dass die Kontakthülse bei dem Schweißvorgang beschädigt wird, insbesondere dass eine Verbindung zwischen dem ersten und zweiten Abschnitt aufgelöst wird. Andererseits wird erreicht, dass die Kontakthülse dauerhaft dynamischen Umweltbedingungen standhält.

Die Ausnehmung kann eine zu der Außenfläche des ersten Abschnittes der Kontakthülse komplementäre Form haben. Die Kontakthülse kann sich dann an der Innenwand der Ausnehmung anschmiegen. Es erfolgt vorzugsweise ein Formschluss zwischen der Ausnehmung und dem ersten Abschnitt. In diesem Fall kommt es beim Schweißen auch zum Einbringen von ausreichend Schweißenergie in dem Bereich der Verbindung zwischen dem Außenumfang des ersten Abschnitts und den Litzen an der Ausnehmung. Dann werden die Kontakthülse und die Litzen in diesem Bereich auch verschweißt.

Wie bereits erwähnt, erfolgt beim Reibschweißen ein Anpressdruck auf die Kontakthülse. Dieser Anpressdruck erfolgt vorzugsweise aus Richtung des zweiten Abschnittes, so dass dieser an der Hülse anliegt. Durch das Anliegen des zweiten Abschnittes an der Oberfläche der Hülse wird beim Reibschweißen auch ausreichend Schweißenergie in diesen Bereich eingebracht. Es hat sich gezeigt, dass es ausreichend sein kann, den zweiten Abschnitt an der Berührfläche mit der Hülse zu verschweißen. Insbesondere wird eine Schweißnaht im Bereich der Auskragung des zweiten Abschnitts ermöglicht.

Die Kontakthülse hat eine Durchgangsöffnung, die als Innenmehrkant gebildet sein kann. Insbesondere ist die Durchgangsöffnung in ihrer Form komplementär zu einem Reibschweißwerkzeug, insbesondere einem Reibschweißdorn. Das Reibschweißwerkzeug kann in die Durchgangsöffnung eingeführt werden und schmiegt sich vorzugsweise in einer Spielpassung an die Durchgangsöffnung an. Zum Verschweißen wird über das Reibschweißwerkzeug ein Drehmoment in die Kontakthülse eingebracht. Dadurch, dass die Durchgangsöffnung als Innenmehrkant gebildet ist, erfolgt eine Aufnahme des Drehmoments des Reibschweißwerkzeugs in besonders guter Weise.

In diesem Zusammenhang sei erwähnt, dass unter dem Begriff Innenmehrkant auch eine Vielrundform verstanden werden kann. Insbesondere ist die Durchgangsöffnung als Mitnahmeprofil gebildet, mit Abschnitten mit kleinerem Radius und Abschnitten mit größerem Radius, wobei die Abschnitte abwechselnd aufeinanderfolgen.

Eine besonders gute Passform der Kontakthülse an der Ausnehmung wird dadurch erreicht, dass sich der Außenumfang des ersten Abschnitts ausgehend von dem zweiten Abschnitt in axialer Richtung der Ausnehmung verjüngt. Der erste Abschnitt ist dabei vorzugsweise kegelstumpfförmig.

Die Erstreckung des ersten Abschnitts in axialer Richtung entspricht vorzugsweise der Materialstärke des elektrischen Leiters samt Hülse in Richtung ihrer Ausnehmung. Dann ist sichergestellt, dass der erste Abschnitt vorzugsweise flächenbündig an der Ausnehmung der Hülse anliegt.

Wie zuvor erwähnt, ergibt sich das Problem der Kontaktierung zwischen Hülse und Anschlussleitung bevorzugt für den Fall, dass Hülse aus Aluminium gebildet ist. Die Verwendung eines Aluminiumwerkstoffs als Material für die Hülse hat große Vorteile im Hinblick auf Materialkosten und Gewicht, so dass es bevorzugt ist, dass die Hülse aus einem Aluminiumwerkstoff oder einer Legierung hiervon gebildet ist. Die Kontakthülse kann aus einem Werkstoff aus Übergangsmetall oder einer Legierung daraus gebildet ist. Bevorzugt ist die Verwendung einer Edelstahl-, Kupfer- oder Messinghülse. Durch die Verwendung der Kontakthülse aus einem anderen Material als Aluminium, ergeben sich zweierlei Vorteile. Zum Einen wird verhindert, dass die elektrische Kontaktierung zwischen Anschlussbolzen und Hülse durch Aluminiumoxid verschlechtert wird. Zum Anderen kann bei der Verwendung eines härteren Materials als Aluminium die mechanische Festigkeit der Verbindung zwischen Kontakthülse und Anschlussbolzen erhöht werden. Bei der Verwendung von Edelstahl, Kupfer oder Messing kann gewährleistet werden, dass die mechanische Beanspruchung bei einer Verschraubung des Anschlussteils durch die Kontakthülse keine wesentliche Verformung der Kontakthülse hervorruft. Auch ist bei mechanischer Dauerbelastung gewährleistet, dass sich die Stirnflächen der Kontakthülse nicht wesentlich verformen, so dass eine dauerhaft feste Verbindung zwischen Anschlussbolzen und Kontakthülse gewährleistet ist.

Gemäß einem Ausführungsbeispiel wird vorgeschlagen, dass der lichte Durchmesser der Durchgangsöffnung in der Kontakthülse zur Aufnahme eines Bolzens, insbesondere eines Gewindebolzens geeignet ist. Hierbei sind insbesondere Gewindebolzen mit einem M6 oder einem M8 Gewinde von besonderem Interesse. Die lichte Weite zwischen den Bereichen mit dem kleineren Radius ist zumindest so groß, dass ein geeigneter Bolzen, insbesondere ein M6 oder ein M8 Bolzen, eingesteckt werden kann. Es hat sich herausgestellt, dass dann lichte Weiten von 6 bzw. 9mm vorteilhaft sind.

Die Anschlusskonsole liegt bevorzugt zwischen den Enden des Kabels und ist vorzugsweise in einem Mittenbereich des Kabels angeordnet. Insbesondere liegt die Anschlusskonsole entfernt von den distalen Enden des Kabels. Durch das bevorzugt stoffschlüssige Anordnen der Hülse auf dem Litzenleiter kann dieser kompaktiert werden. Die Litzen können durch die Hülse fixiert werden. Außerdem können die Litzen durch die Hülse vor Umwelteinflüssen geschützt werden.

Insbesondere ist der Litzenleiter des elektrischen Kabels isoliert und im Bereich der Anschlusskonsole ist der Litzenleiter (Leiter) frei von der Isolation. Somit liegt die Anschlusskonsole zwischen zwei isolierten Bereichen des Leiters. In diesem abisolierten Bereich kann gemäß einem Ausführungsbeispiel die Hülse stoffschlüssig mit dem Leiter verbunden sein. Sind mehrere abisolierte Bereiche vorgesehen, können entlang des Verlaufs des Kabels eine oder mehrere Anschlusskonsolen vorgesehen sein, über die elektrische Abgriffe möglich sind. Insbesondere wenn das Kabel ein vom Hauptbatteriestrang ist, können somit vielfältige elektrische Abgriffe an dem Batteriestrang ermöglicht werden, ohne den Leitwert der Batterieleitung als solche durch ansonsten notwendige Unterbrechungen negativ zu beeinflussen. Die Abgriffe führen nicht zu einer erhöhten elektrischen Verlustleistung entlang des Kabels, da das Kabel durch die Abgriffe nicht unterbrochen wird.

Über die Kontakthülse kann ein Abgriff mit der Leitung des Kabels verbunden werden. Hierbei bleibt das Kabel unversehrt und sein Leitwert wird im Wesentlichen nicht beeinflusst. So ist es möglich, ein ein- oder zwei- oder mehrstückiges Kabel von der Batterie bis zum Motorraum, insbesondere bis zum Starter oder zum Elektromotor im Motorraum zu führen, welches durch Abgriffe in seiner elektrischen Leitfähigkeit jeweils eines Abschnittes nicht oder nur marginal beeinflusst wird. Die Isolation des Kabels ist derart, dass diese in den Isolationsabschnitten den Leiter vollständig umschließt. Die Isolation ist vorzugsweise aus einem Nichtleiter, insbesondere einem Kunststoff, wie beispielsweise PVC oder Silikon gebildet.

Gemäß einem Ausführungsbeispiel wird vorgeschlagen, dass der elektrische Leiter ein Rundleiter ist. Vorzugsweise ist der elektrische Leiter dabei biegesteif und somit auf Grund insbesondere seiner eigenen Gewichtskraft nicht plastisch verformbar. Es wird auch vorgeschlagen, dass die Litzen aus Aluminium oder einer Legierung davon gebildet ist. Insbesondere E-Aluminium, beispielsweise Aluminium 99,5 kann für den Leiter zum Einsatz kommen.

Abhängig von der Verwendung des Materials des Leiters wird vorzugsweise die Hülse aus einem elektrisch ähnlichen, insbesondere dem gleichen metallischen Material gebildet. Ist der Leiter beispielsweise aus Kupfer oder einer Legierung davon gebildet, kann die Hülse ebenfalls aus Kupfer gebildet werden. Da jedoch insbesondere bei der Verwendung von Aluminium die gegenständliche Anschlusskonsole vorteilhaft ist, wird auch gemäß einem Ausführungsbeispiel vorgeschlagen, dass die Hülse aus Aluminium oder Legierungen davon gebildet ist. Durch die Verwendung eines elektrisch ähnlichen oder gleichen Metalls für den Leiter als auch die Hülse wird eine sortenreine Verbindung im Bereich der Anschlusskonsole zwischen Abgriff und Leiter gewährleistet. Kontaktkorrosionen werden somit verhindert bzw. auf ein Minimum reduziert. Das hier für die Hülse gesagte gilt gleichermaßen für die beschriebene Kontakthülse.

Auf der anderen Seite ist die Anschlusskonsole dazu gedacht, einen elektrischen Abgriff zur Verfügung zu stellen. Dieser Abgriff wird durch von dem Abgriff abgehende Kabel genutzt. Diese können beispielsweise aus Kupfer gebildet sein. Um den elektrischen Abgriff an der Anschlusskonsole zu erleichtern, wird vorgeschlagen, dass die Kontakthülse und/oder das Anschlussteil aus Kupfer oder Legierungen davon gebildet sein können. Es ist jedoch auch ein Abgang zu einem elektrischen Kontaktteil aus Aluminium möglich, so dass dann die Kontakthülse und/oder das Anschlussteil ebenfalls aus Aluminium gebildet sein können.

Die Kontaktkorrosion zwischen der Kontakthülse aus Aluminium und dem Anschlussteil kann dadurch reduziert werden, dass das Anschlussteil aus Stahl oder Edelstahl gebildet ist. In diesem Fall ist die Kontaktkorrosion zwischen dem Anschlussteil und der Kontakthülse vernachlässigbar. Durch geeignete Isolationsmaßnahmen kann die Kontaktstelle zwischen dem Anschlussteil und der Kontakthülse vor Umwelteinflüssen, insbesondere vor Wasser geschützt werden und somit die Korrosionsgefahr verringert werden.

Um das Anschlussteil für den Anschluss an einen Kabelschuh oder ein sonstiges Kabelende auszustatten, wird vorgeschlagen, dass dieses verzinnt und/oder unternickelt ist.

Gemäß einem Ausführungsbeispiel wird vorgeschlagen, dass die Hülse, die Kontakthülse, in Teilen das optionale Anschlussteil und der Leiter mit einer Isolation ummantelt sind. Insbesondere ist die Isolation derart, dass sie nicht nur die Hülse, die Kontakthülse, Teile des optionalen Anschlussteils und den Leiter umgibt, sondern bis über die Isolation des Leiters hinaus ragt. Somit wird eine vollständige Einhausung der Hülse, der Kontakthülse, des Teils des Anschlussteils und des Leiters ermöglicht. Der Eintritt von Feuchtigkeit wird durch die Isolation weitestgehend verhindert. Hierdurch sind die Übergänge zwischen dem Leiter und der Hülse, respektive zwischen der Kontakthülse und dem Anschlussteil vor Umgebungsfeuchte geschützt.

Um einen elektrischen Anschluss an dem Anschlussbolzen zu ermöglichen, ist der Anschlussbolzen an seinem von der Kontakthülse entfernten Ende frei von der Isolation. Es ist möglich, dass die Isolation im Bereich des Bolzens derart ist, dass sie zur Aufnahme eines Verschlusses, insbesondere in Form einer Kappe gebildet ist. Somit kann das Ende des Bolzens mit einer Isolationskappe abgedeckt werden, und für den Fall, dass ein Anschluss an den Bolzen erfolgen soll, die Kappe entfernt werden.

Um im Rahmen der Installation des Bordnetzes Fehlpolungen zu vermeiden und insbesondere die richtigen Bolzen für die jeweiligen Abgänge zu kontaktieren, wird vorgeschlagen, dass die Isolation im Bereich des von der Kontakthülse entfernten Ende des Anschlussbolzens Poka Yoke mechanisch kodiert ist. Durch eine bestimmte Form des Umfangs der Isolation des Bolzens im Bereich des von der Hülse entfernten Endes kann gewährleistet werden, dass nur bestimmte Arten von Anschlusssteckern an den Bolzen angeschlossen werden können. Sofern z.B. der Innenumfang eines Steckers nicht kongruent zu dem Außenumfang der Isolation am Bolzen ist, kann eine Steckverbindung verhindert sein. Hierdurch können Fehlverbindungen verhindert werden. Insbesondere erfolgt die Kodierung durch Formgebung des Außenumfangs der Isolation im Bereich des Endes des Bolzens.

Um die Anschlusskonsole beispielsweise in einer Aufnahme innerhalb der Fahrzeugkarosse fixieren zu können, wird vorgeschlagen, dass eine Kantenlänge der verpressten Hülse größer ist als der Durchmesser der Leitung, insbesondere größer als der Durchmesser des Kabels ist. Insbesondere haben sich quadratische als auch rechteckige Formen der verpressten Hülse als vorteilhaft herausgestellt.

Nachfolgend wird der Gegenstand anhand einer Ausführungsbeispiele zeigenden Zeichnung näher erläutert. In der Zeichnung zeigen:
- Fig. 1a: einen Querschnitt eines Kabels;
- Fig. 1b: eine Ansicht eines abisolierten Kabels;
- Fig. 1c: eine Ansicht eines weiteren abisolierten Kabels;
- Fig. 2a: ein Kabel mit einer noch nicht aufgebrachten Hülse;
- Fig. 2b: ein Kabel mit einer noch nicht aufgebrachten Hülse;
- Fig. 2c: ein Kabel mit einer noch nicht aufgebrachten Hülse;
- Fig. 2d: ein Kabel mit einer aufgebrachten Hülse;
- Fig. 3a.f: Hülsen gemäß Ausführungsbeispielen;
- Fig. 4a,b: eine Verbindung zwischen einer Hülse und einem Litzenleiter gemäß Ausführungsbeispielen;
- Fig 5a-c: eine Verbindung zwischen einer Hülse und einem Litzenleiter gemäß Ausführungsbeispielen;
- Fig. 6: Fügen einer Hülse auf einem Litzenleiter;
- Fig. 7: eine Hülse mit einer Ausnehmung;
- Fig. 8a-c: Kontakthülsen gemäß Ausführungsbeispielen;
- Fig. 9a-d: Kontakthülsen gemäß Ausführungsbeispielen;
- Fig. 10: eine Verbindung zwischen einer Kontakthülse und einer Hülse mit Leiter;
- Fig. 11: Fügen einer Kontakthülse in einer Ausnehmung einer Hülse;
- Fig. 12: eine Anschlusskonsole mit einer Sicherungsbox.

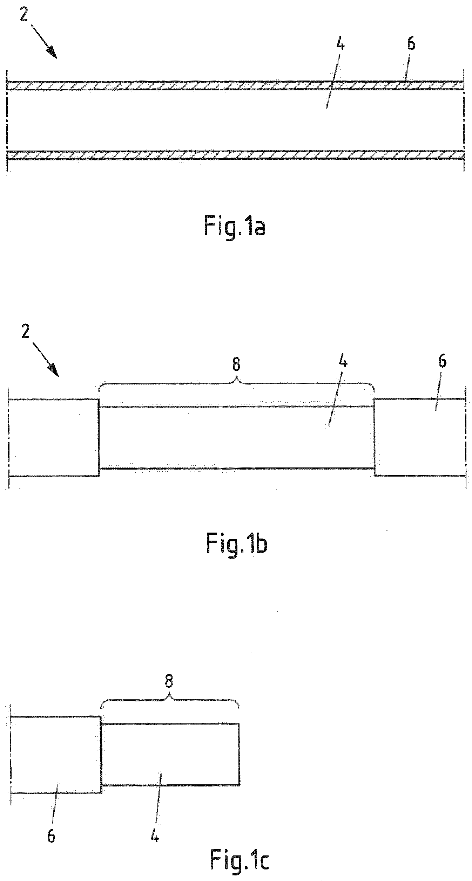

Figur 1a zeigt ein elektrisches Kabel 2 mit einem metallischen Leiter 4 und einer Isolation 6.

Der metallische Leiter 4 ist als Litzenleiter und insbesondere biegesteif.

Der Leiter 4 ist vorzugsweise ein Rundleiter. Das Material des Leiters 4 ist vorzugsweise Aluminium, insbesondere Aluminium 99,5. Die Biegesteifigkeit des Kabels 2 ergibt sich dann, wenn sich das Kabel 2 auf Grund seiner eigenen Gewichtskraft nicht plastisch verformen lässt. Es ist eine größere Kraft als die Gewichtskraft notwendig, um eine plastische Verformung des Kabels 2 herbeizuführen.

Die Isolation 6 ist vorzugsweise aus PVC oder Silikon gebildet.

Wie in Figur 1b dargestellt ist, kann bei einer gegenständlichen Anschlusskonsole das Kabel 2 in einem Mittenbereich, das heißt entfernt von seinen jeweiligen distalen Enden, abisoliert sein, so dass ein abisolierter Bereich 8 gebildet ist. In dem abisolierten Bereich 8 ist der Leiter 4 frei von der Isolation 6.

Wie in Figur 1c dargestellt ist, kann bei einer gegenständlichen Anschlusskonsole das Kabel 2 in einem Endbereich, das an einem stirnseitigen Ende, abisoliert sein, so dass ein abisolierter Bereich 8 gebildet ist. In dem abisolierten Bereich 8 ist der Leiter 4 frei von der Isolation 6.

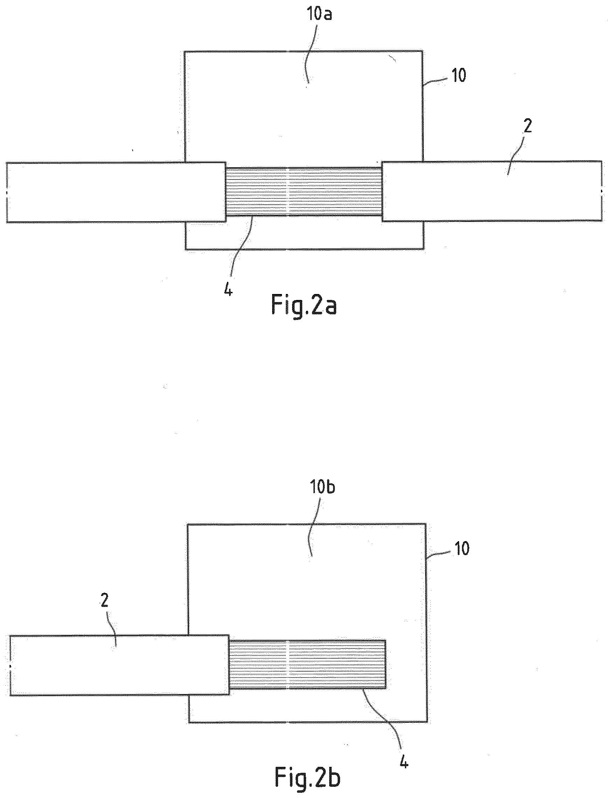

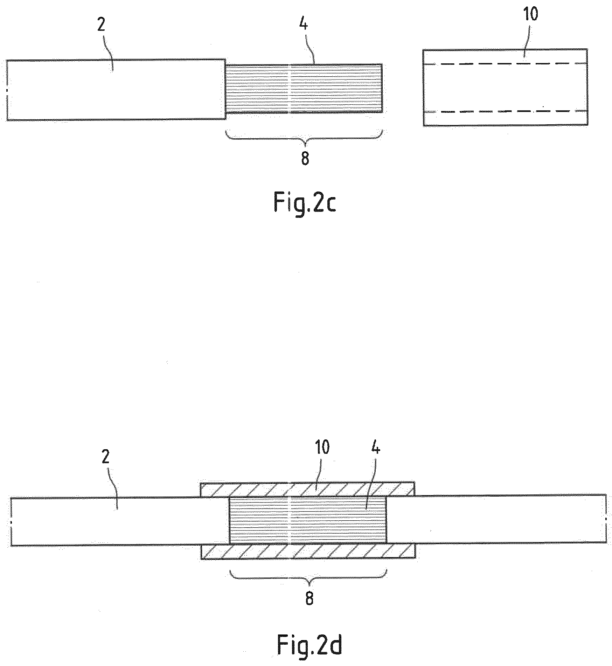

Ein Fügen zwischen der Hülse 10 und der Litzenleitung 4 des Kabels 2 ist beispielhaft in den Figs. 2 gezeigt.

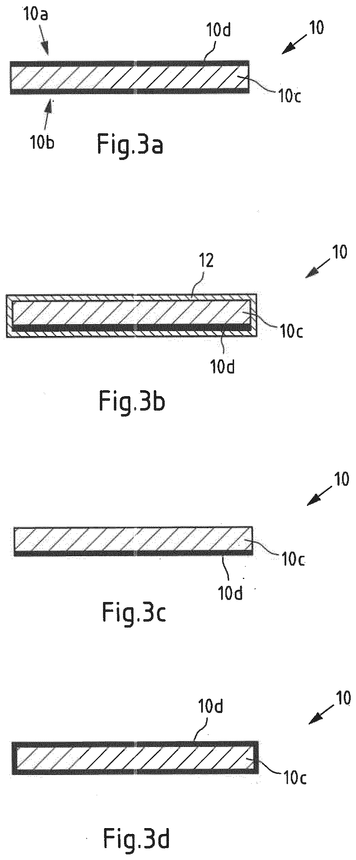

Ein Blech wie es in Figs. 3a-f beschrieben ist kann dabei, je nach Anwendungsfall und Material der Litzenleitung 4, entweder mit der Oberfläche 40a oder der Oberfläche 40 auf die Litzenleitung 4 aufgelegt werden oder mit dem Trägermaterial 10c oder dem Beschichtungsmaterial 10d auf die Litzenleitung 4 aufgelegt werden.

Hierbei ist es möglich, dass das Kabel 2 gespleißt ist, so dass die Litzenleitung 4 zwischen zwei isolierten Bereichen des Kabels 2 frei liegt. Um einen solchen Bereich wird nun die Hülse 10 gelegt. Hierbei wird die Hülse 10 mit einer der Oberflächen 10a, b auf die Litzenleitung 4 aufgelegt und anschließend umgeschlagen. Die Hülse 10 kann vor dem Umschlagen abgelängt sein, oder nach dem Umschlagen abgelängt werden.

Fig. 2b zeigt ein Ausführungsbeispiel, bei dem die Hülse an einem stirnseitig abisolierten Ende des Kabels 2 um die Litzenleitung 4 gelegt wird. Auch hier ist es abhängig davon, aus welchem Werkstoff die Litzenleitung 4 ist, welche der Oberflächen 10a, b der Hülse 10 auf die Litzenleitung 4 aufgelegt wird. Für die Litzenleitung 4 kommen insbesondere Kupferwerkstoffe oder Aluminiumwerkstoffe in Frage.

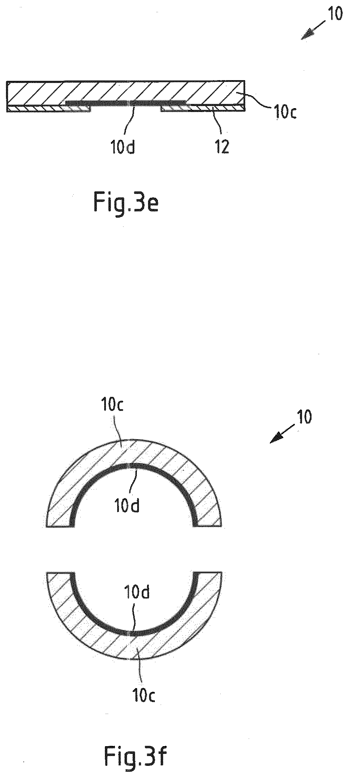

Fig. 2c zeigt das Aufschieben oder Aufsetzen einer Hülse 10, beispielsweise gemäß der Fig. 3f auf ein stirnseitiges Ende eines Kabels 2, an dem die Litzenleitung 4 abisoliert ist.

Gemäß Fig. 2d ist das Kabel 2 gespleißt, so dass die Litzenleitung 4 zwischen zwei isolierten Bereichen des Kabels 2 frei liegt. Auf einen solchen Bereich wird nun die Hülse 10 aufgeschoben oder im Falle einer mehrteiligen Hülse aufgesetzt. Hierbei wird die Hülse 10 mit einer der Oberflächen 10a, b auf die Litzenleitung 4 aufgelegt und anschließend verpresst.

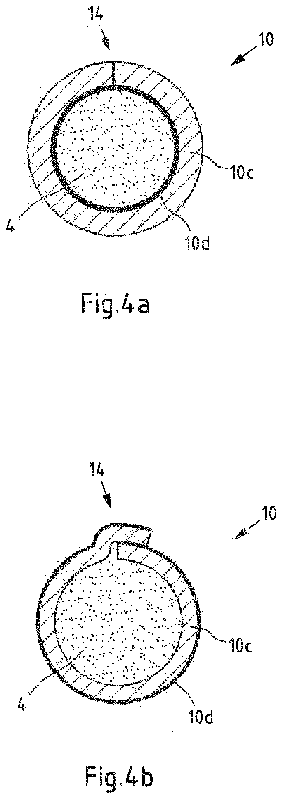

Nach dem Anlegen der Hülse 10 an die Litzenleitung 4 wird diese plastisch verformt und um die Litzenleitung gelegt. Ein Querschnitt einer solchen zumindest mechanisch gefügten Verbindung zwischen der Hülse 10 und der Litzenleitung 4 ist in der Fig. 4a gezeigt.

Die Figuren 3a, f zeigen die Hülse 10 im noch nicht umgeformten Zustand, und insbesondere einen Quer- oder Längsschnitt durch die Hülse 10.

Fig. 3a zeigt eine Hülse 10 in einen Querschnitt. Die Hülse 10 weist zwei Oberflächen 10a und 10b auf, die aus unterschiedlichen Metallwerkstoffen gebildet sind. Die Hülse 10 gemäß der Fig. 3a ist beispielsweise ein bimetallischer Blechstreifen, mit einem Trägermaterial 10c und einem Beschichtungsmaterial 10d. Der Übergang zwischen dem Trägermaterial 10c und dem Beschichtungsmaterial 10d ist gekennzeichnet durch eine Standardpotentialdifferenz. Diese ist vorzugsweise größer als ein Volt.

Das Trägermaterial 10c kann beispielsweise ein Aluminiumwerkstoff oder ein Kupferwerkstoff sein. Sämtliche Legierungen von Aluminium und Kupfer können als Trägermaterial zum Einsatz kommen. Das Beschichtungsmaterial 10d kann ebenfalls ein Kupferwerkstoff oder ein Aluminiumwerkstoff sowie sämtliche hierzu gehörigen Legierungen sein. Auch kann das Beschichtungsmaterial 10d Nickel sein.

Fig. 3b zeigt ein weiteres Ausführungsbeispiel einer Hülse 10. Hierbei sind Trägermaterial 10c und Beschichtungsmaterial 10d allseitig mit einem weiteren Material 12 beschichtet. Das Material 12 kann insbesondere ein Nickelwerkstoff sein.

Fig. 3c zeigt ein weiteres Ausführungsbeispiel einer Hülse 10. Hierbei kann das Trägermaterial 10c als Blech gebildet sein und das Beschichtungsmaterial 10d kann beispielsweise eine Beschichtung insbesondere mit Nickel sein. Die Beschichtung kann eine galvanische Beschichtung sein.

Fig. 3d zeigt ein weiteres Ausführungsbeispiel einer Hülse 10. Hierbei kann ein Trägerwerkstoff 10c allseitig mit einem Beschichtungsmaterial 10d beschichtet sein. Hierbei kann das Beschichtungsmaterial 10d vorzugsweise eine Nickelschicht sein.

Fig. 3e zeigt ein weiteres Ausführungsbeispiel einer Hülse 10. Hierbei kann ein Trägermaterial 10c mit einem daran angeordneten oder darin eingelassenen, insbesondere walzplattierten Beschichtungsmaterial 10d versehen sein. Ein Übergang zwischen dem Trägermaterial 10c und dem Beschichtungsmaterial 10d kann beispielsweise durch eine Beschichtung 12, die beispielsweise Nickel ist, beschichtet sein. Das Beschichtungsmaterial 10d kann entfernt von dem Übergang zwischen dem Trägermaterial 10c und dem Beschichtungsmaterial 10d frei von der Beschichtung 1 sein.

Fig. 3f zeigt ein weiteres Ausführungsbeispiel einer Hülse 10. Diese ist als zweiteilige Hülse 10 gebildet, bei dem Trägermaterial 10c als auch Beschichtungsmaterial 10d an beiden Hülsenteilen vorgesehen sind. Nicht gezeigt ist, dass die Hülse auch vollumfänglich beschichtet sein kann, z.B. mit Nickel.

Die Ausführungen zu den Materialkombinationen für Trägermaterial 10c und Beschichtungsmaterial 10d gelten für alle denkbaren Hülsen 10. Insbesondere sind weitere Materialkombinationen, insbesondere unter Verwendung von Edelstahl oder dergleichen möglich.

Fig. 4a zeigt einen Querschnitt einer Verbindung zwischen einer Hülse 10 und einer Litzenleitung 4. Hierbei ist das Beschichtungsmaterial 10d auf der der Litzenleitung 4 zugewandten Seite der Hülse 10 und das Trägermaterial 10c auf der der Litzenleitung 10 abgewandten Seite der Hülse 10. Durch plastisches Verformen der Hülse 10 entsteht zunächst eine formschlüssige Verbindung an dem Übergang zwischen dem Beschichtungsmaterial 10d und der Litzenleitung 4. Die Hülse 10 ist in einem Stumpfstoß um die Litzenleitung 4 gelegt und eine Naht 14 ist gebildet.

Fig. 4b zeigt ein weiteres Ausführungsbeispiel, bei dem beispielsweise das Trägermaterial 10c auf der der Litzenleitung 4 zugewandten Seite der Hülse 10 und das Beschichtungsmaterial 10d auf der der Litzenleitung 10 abgewandten Seite der Hülse 10 angeordnet ist.

Die Hülse 10 ist beispielsweise um die Litzenleitung 4 gelegt worden und anschließend abgelängt worden. Die Naht 14 ist vorliegend beispielsweise als Überlappstoß geformt.

Nach dem Anlegen der Hülse an die Litzenleitung 4 wird diese plastisch verformt.

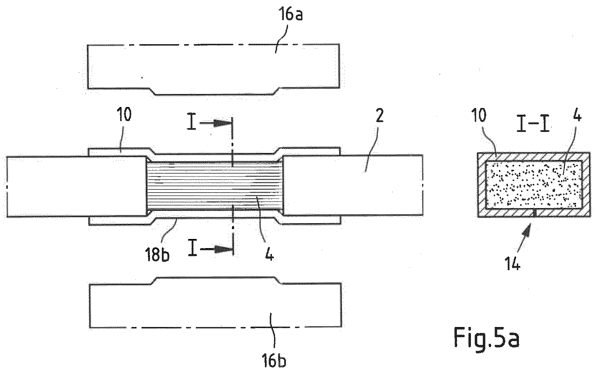

Fig. 5a zeigt das Verpressen der Hülse 10 an der Litzenleitung 4. Fig. 5a zeigt beispielhaft zwei Pressbacken 16a, 16b, mit denen die Hülse 10 auf den Leiter 4 plastisch verformend gefügt werden kann. Hierzu verfahren die Pressbacken 16a, b in Richtung der Hülse 10 und verformen dieses dabei. Der Querschnitt I-I ist in der Fig. 5a rechts dargestellt. Wie zu erkennen, wird mit Hilfe der Pressbacken 16a, b beispielsweise eine Kontur der Hülse 10vorgegeben. Im gezeigten Beispiel hat die Hülse 10 nach dem Verpressen durch die Pressbacken 16a, b eine rechteckige Außenkontur mit zwei einander gegenüberliegenden Flächen 18a,b. Die Flächen 18a, b verlaufen bevorzugt parallel zueinander. Außerdem liegt die Hülse 10 unmittelbar an der Litzenleitung 4an.

Ferner ist in der Fig. 5a zu erkennen, dass die Hülse 10 optional auch im Bereich der Isolation des Kabels 2 an das Kabel 1 angepresst wird. Die Pressbacken 16a, b können so geformt sein, dass eine formschlüssige sowie bevorzugt auch gasdichte Verbindung zwischen der Hülse 10 und der Isolation des Kabels 2 gebildet wird.

In der Fig. 5a ist auch die Naht 14 der Hülse 10 zu erkennen. Die Naht 14 liegt im Bereich einer ebenen Oberfläche 18a,b des Außenumfangs der Hülse 10. Insbesondere ist die Naht 14 im Bereich einer Schweißebene mit der die Hülse 10 mit der Litzenleitung 4 verschweißt wird. Die Pressbacken 16a, b können auch als Ultraschallwerkzeuge, insbesondere als Amboss und Sonotrode gebildet sein und unmittelbar während des gemäß der Fig. 5a beschriebenen Verpressens ein Verschweißen der Hülse 10 mit der Litzenleitung 4 als auch entlang der Naht 14 ermöglichen.

Die Pressbacken 16a, b können als Sonotrode und Amboss arbeiten. Die Kontur von Sonotrode 16a und Amboss 16b kann dabei derart sein, dass der Querschnitt entlang der Schnittebene I-I der Hülse 10 nach dem Verformen kantig ist. Mit Hilfe der Sonotrode 18a und des Ambosses 18b ist es möglich, die Hülse 10 zunächst formgebend um die Litzenleitung 4 zu legen und anschließend oder im gleichen Arbeitsschritt mit der Litzenleitung 4 zu verschweißen. Hierbei kann gleichzeitig ein Verschweißen entlang der Naht 14 erfolgen.

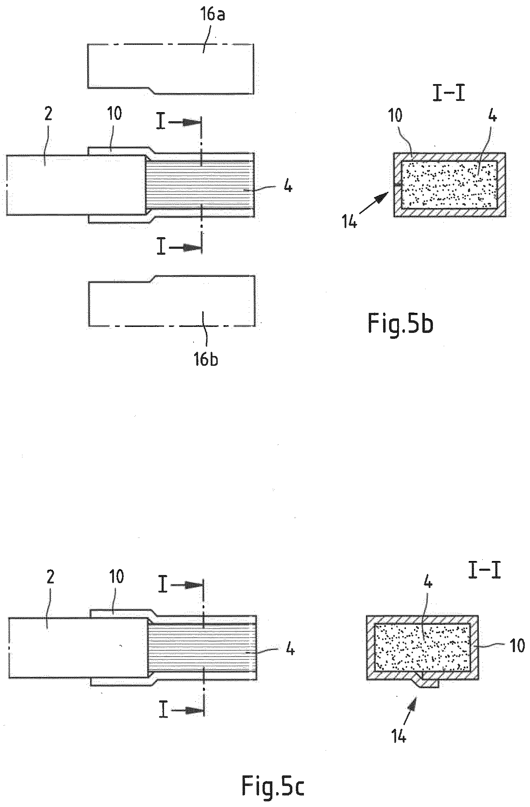

Fig. 5b zeigt ein weiteres Ausführungsbeispiel. Hierbei können Pressbacken 16a, b oder Sonotrode 16a und Amboss 16b vorgesehen sein, um die Hülse 10 auf die Litzenleitung 4 aufzupressen und gegebenenfalls gleichzeitig oder danach zu verschweißen. Durch die Pressbacken 16a, b erfolgt eine Formgebung entsprechend des Querschnittes entlang des Schnittes I-I wie in der Fig. 5 bgezeigt. Auch hier werden wieder ebene Schweißflächen gebildet. Innerhalb einer dieser Schweißflächen kann die Naht 14 vorgesehen sein.

Fig. 5c zeigt ein weiteres Ausführungsbeispiel, bei dem die Hülse 10 an die Litzenleitung 4 und die Isolation des Kabels 4 angepresst wird. In dem Schnitt I-I ist dargestellt, dass der Außenumfang beispielsweise vierkantig sein kann und insbesondere auch die Naht 14 als Überlappstoß gebildet sein kann.

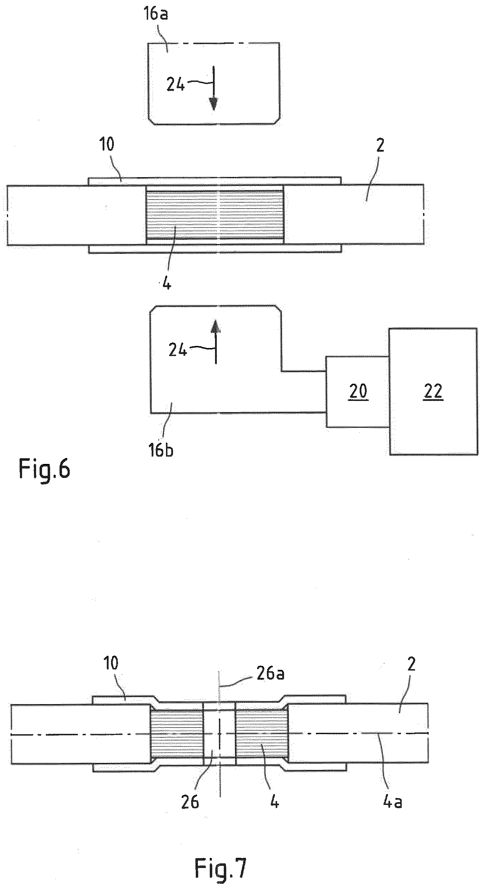

Die Pressbacken 16a, 16b können als Crimpstempel 16a und einem Crimpgesenk 16b gebildet sein, wie in Fig 6a gezeigt. Das Crimpgesenk 16b ist über einen Booster 20 mit einem Ultraschallkonverter 22 gekoppelt.

Zum Vercrimpen wird zunächst die Hülse 10 mit dem Leiter 4 auf das Crimpgesenk 16b aufgelegt.

Anschließend wird der Crimpstempel 16a mit einer Kraft gegen das Crimpgesenk 16b gedrückt, so dass die Hülse 10 verpresst wird.

Gleichzeitig wird der Konverter 20 aktiviert und das Crimpgesenk 16b wird über den Booster 10 mit einer Hochfrequenzschwingung, insbesondere einer Ultraschallschwingung angeregt. Die Schwingungsrichtung ist dabei insbesondere Senkrecht zu der Bewegungsrichtung 24. Auch kann die Schwingungsrichtung im Wesentlichen parallel zu der Längsrichtung der Leitung 2 verlaufen.

Während des Absenkens des Stempels 16a auf das Gesenk 16b werden sowohl die Hülse 10 als auch der Leiter 4 mit der Hochfrequenzschwingung angeregt. Dies führt zu einer einfacheren Verformung der Hülse 10 und des Leiters 4. Durch die Hochfrequenzschwingung wird im abisolierten Bereich 8 eine Verschweißung zwischen den Litzen des Leiters 4 untereinander bewirkt. Die eingetragene Energie kann geringer sein als notwendig, um ein Verschweißen zwischen dem Metall der Litzen 4 am und dem Metall der Hülse 10 zu bewirken.

Nach dem Vercrimpen werden die Crimpstempel 16a, 12 entgegen der Richtung 24 von der Hülse angehoben. Die gebildete Crimpverbindung ist vorteilhaft gegenüber bisherigen, da die Leitfähigkeit des Kontaktes verbessert ist. Der Grund hierfür ist die Hochfrequenzschwingung, die während des Vercrimpens eingeprägt wurde. Durch diese Hochfrequenzschwingung wird insbesondere eine Isolationsschicht auf den Litzen des Leiters 4 gelöst. Ferner wird eine Verschweißung zwischen den Litzen untereinander im abisolierten Bereich 8 des Leiters 4 bewirkt. Es entsteht ein vorzugsweise hohlraumfreies Bündel an Litzen.

Während der Crimpstempel 16a auf die Hülse 10 bewegt wird, insbesondere nachdem der Crimpstempel 16a die Hülse 10 plastisch verformt hat, kann ein Lot an den Bereich der Hülse 10 herangeführt werden. Durch die Schwingungsenergie, die durch das Gesenk 16a eingeprägt wurde, hat sich der Leiters 4 sowie die Hülse 10 derart erwärmt, dass das Lot aufschmilzt.

Auch ist es möglich, insbesondere bei kleinen Querschnitten, dass nach dem Fügevorgang zunächst der Crimpstempel 16a ein wenig von der Hülse 10 angehoben wird, so dass die Anpresskraft gegenüber dem Crimpvorgang verringert ist. Ferner kann die Schwingungsenergie verringert werden, jedoch noch weiterhin in die Kontaktstelle zwischen Leiter 2 und der Hülse 10 eingeprägt werden. Dadurch kann der Leiters 4 als auch die Hülse 10 soweit erwärmt werden, dass das Lot aufschmilzt und in die Crimpverbindung eindringt.

Durch die hochfrequente Schwingung entsteht ein Kapillareffekt für das Lot und es fließt sehr gut in gegebenenfalls noch stehende Hohlräume ein.

Nach dem Fügen der Hülse 10 an die Litzenleitung 4 formschlüssig als auch stoffschlüssig, insbesondere mittels Ultraschallschweißen oder Widerstandsschweißen, und gegebenenfalls an die Isolation des Kabels 2, ist es möglich, eine Kontakthülse in die Hülse 10 einzubringen.

Hierzu wird eine Ausnehmung 26, wie in Fig. 7 beispielhaft gezeigt, in die Hülse 10 und die Litzenleitung 4 eingebracht. Die Litzenleitung 4 hat eine Längsachse 4a, Parallel zu dieser Längsachse 4a erstreckt sich die Hülse 10. Quer zu dieser Längsachse 4a verläuft die Achse 26a der Ausnehmung 26.

Die Ausnehmung 26 kann mittels Stanzen oder Bohren in die Hülse 10 samt Leitung 4 eingebracht werden. Anschließend kann eine Kontakthülse in die Ausnehmung eingebracht werden, wie nachfolgend gezeigt werden wird.

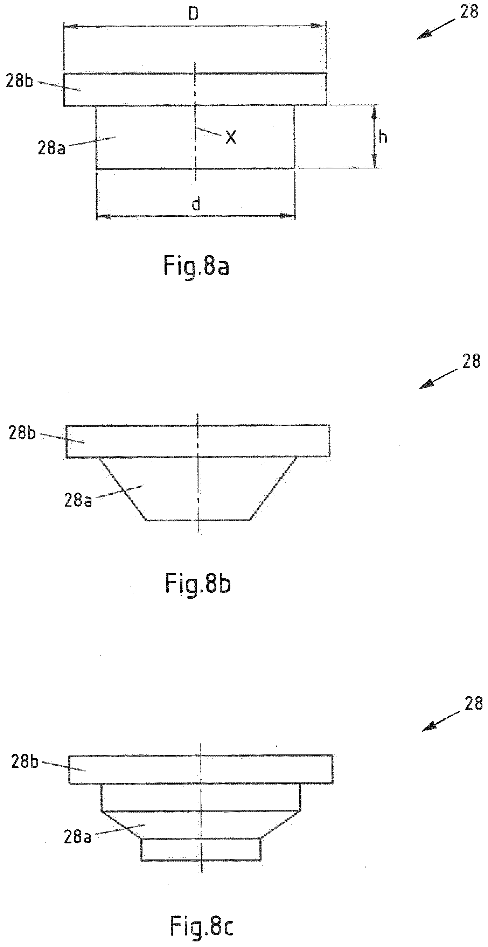

Fig. 8a zeigt eine Kontakthülse 28. Die Kontakthülse 28 ist aus zwei Abschnitten 28a, 28b gebildet. Die Abschnitte 28a, b sind nebeneinander in Richtung der Längsachse X der Kontakthülse 28 angeordnet.

Die zwei Abschnitte 28a, b können auch einstückig sein und aus dem Vollmaterial der Kontakthülse 28 gebildet sein.

Zu erkennen ist, dass der Abschnitt 28a einen geringeren Durchmesser d hat, als der Abschnitt 28b, der den Durchmesser D hat. Durch den größeren Durchmesser D ist der Abschnitt 28b flanschartig an dem Abschnitt 28a angeordnet.

Der Abschnitt 28a hat vorzugsweise eine Höhe h, welche der Länge der Ausnehmung 26 in Richtung 26 entspricht.

Fig. 8b zeigt eine weitere Kontakthülse 28, bei der der erste Abschnitt 28a ausgehend von dem zweiten Abschnitt 28b entlang der Achse X sich verjüngt. Insbesondere ist der erste Abschnitt 28a kegelstumpfförmig.

Fig. 8c zeigt eine weitere Kontakthülse 28, bei der der zweite Abschnitt 28a abschnittsweise aus einem zylinderförmigen Bereich, einem kegelstumpfförmigen mittleren Bereich und einem zylinderförmigen Endbereich gebildet ist.

Die Form der jeweils ersten Abschnitte 28a ist vorzugsweise so, dass deren Profile korrespondieren zu der Ausnehmung 26 ist.

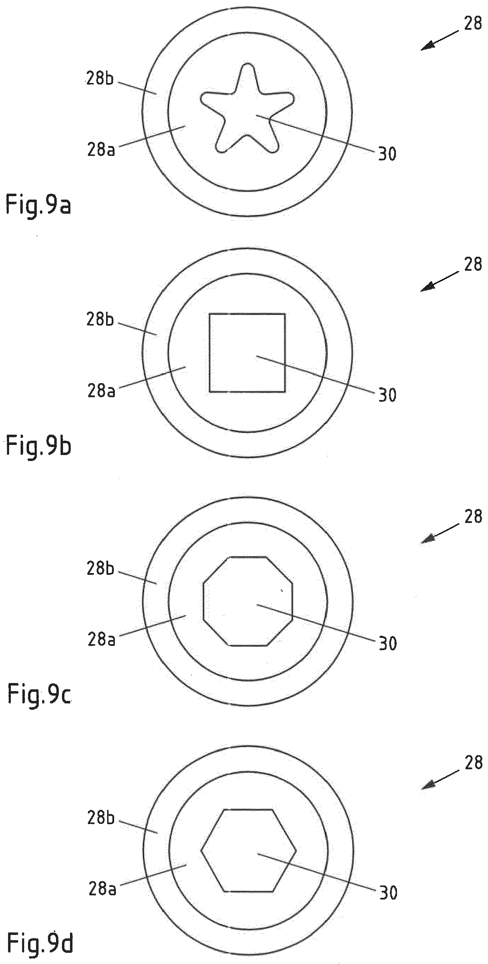

Zum prozesssicheren Verschweißen der Kontakthülse 28 in der Ausnehmung 26 wird vorgeschlagen, dass eine Durchgangsöffnung 30 in der Kontakthülse 28 mit verschiedenen Durchmessern gebildet ist. Solche verschiedenen Durchmesser resultieren in unterschiedlichen Profilen der Durchgangsöffnung 30, wie sie in den Fig. 9a-d gezeigt sind.

Fig. 9 a-d zeigen Draufsichten auf Kontakthülsen 2 auf den jeweils ersten Abschnitt 28a.

Fig. 9a zeigt eine Kontakthülse 28 mit einer Durchgangsöffnung 30, welche als Vielrundform gebildet ist.

Die Durchgangsöffnung 30 geht durch den ersten Abschnitt 28a und den zweiten Abschnitt 28b hindurch. Ferner ist in der Fig. 9, wie auch in den Fig. 9b-d zu erkennen, dass der zweite Abschnitt 28b flanschartig an dem ersten Abschnitt 28a angeordnet ist und sich eine in Richtung des ersten Abschnitts 28a weisende Auflagefläche bildet. Mit dieser Auflagefläche kann die Kontakthülse 28 an die Hülse 10 im Bereich der Ausnehmung 26 angelegt werden.

Fig. 9b zeigt ein Ausführungsbeispiel, bei dem die Durchgangsöffnung 30 viereckig ist.

Fig. 9c zeigt ein Ausführungsbeispiel, bei dem die Durchgangsöffnung 30 achteckig ist.

Fig. 9d zeigt Ausführungsbeispiel, bei dem die Durchgangsöffnung 30 sechseckig ist.

Die Durchgangsöffnungen 30 sind derart, dass sie jeweils einen lichten Durchmesser aufweisen, der kleiner ist, als der jeweils größtmögliche Durchmesser. Durch den Versprung der Durchmesser erfolgt eine besonders gute Drehmomentübertragung von einem Reibschweißwerkzeug auf die Kontakthülse 28.

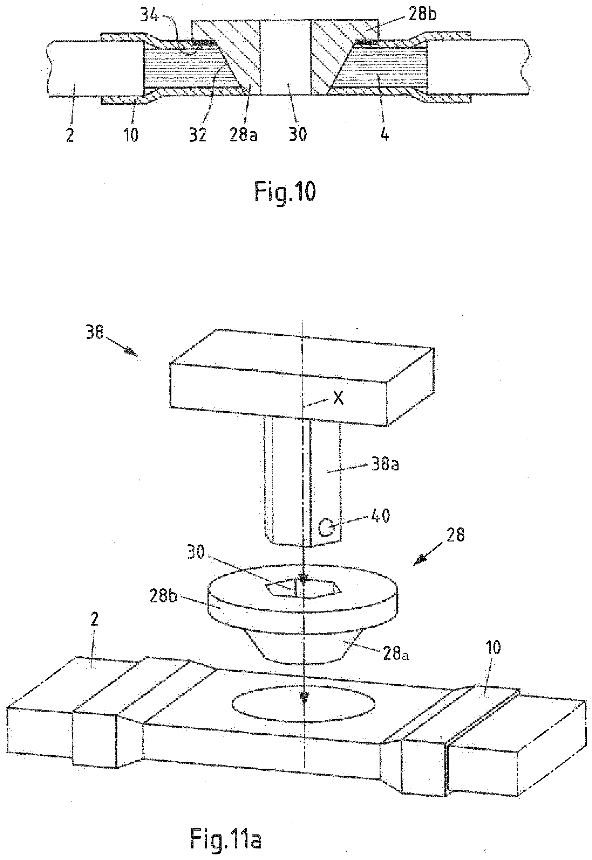

Eine verschweißte Kontakthülse 28 an der Hülse 10 ist in der Fig. 10 dargestellt. Zu erkennen ist, dass die Kontakthülse 28 in die Ausnehmung 26 eingesteckt ist. Ferner ist dargestellt, dass sich eine Schweißnaht 34 zumindest im Bereich der Berührfläche zwischen dem zweiten Abschnitt 28 b und der Oberfläche der Hülse 10 bildet. Die Schweißnaht 34 kann sich jedoch auch in den Bereich der Berührfläche 32 zwischen den Mantelflächen des ersten Abschnittes 28a und der Ausnehmung 26 erstrecken. Dabei kann ein Stoffschluss zwischen dem Material der Kontakthülse 28 im Abschnitt 28a mit den Litzen des Litzenleiters 4 gebildet sein.

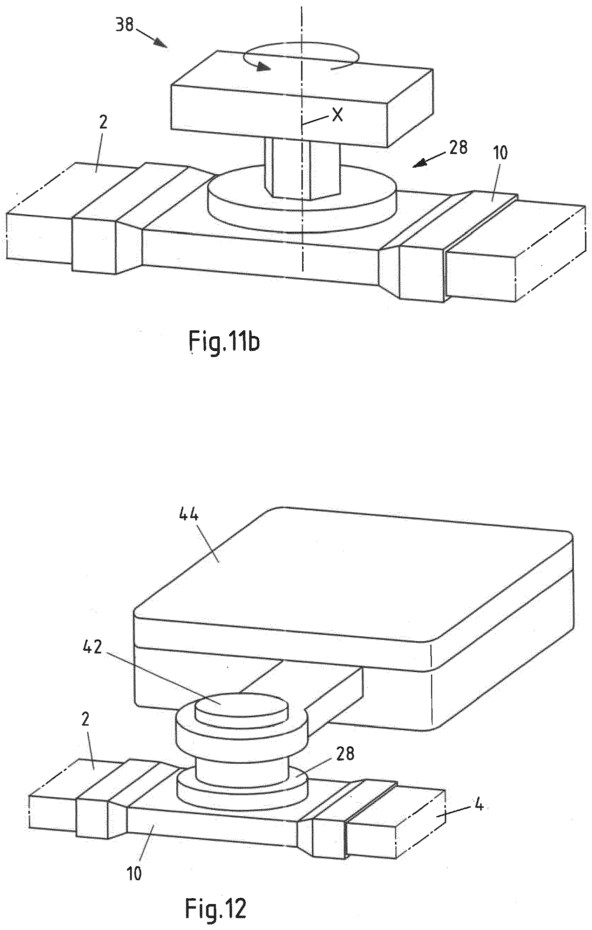

Zum Fügen der Kontakthülse 28 in die Ausnehmung 26 wird zunächst die Kontakthülse 28 mit ihrer Durchgangsöffnung 30 auf einen Reibschweißdorn 38a aufgeschoben. Fig. 11 zeigt, wie der Reibschweißdorn 38a entlang der X-Achse in die Durchgangsöffnung 30 eingeschoben wird. Optionale Haltemittel 40 üben eine Haltekraft auf die Kontakthülse 28 aus, so dass diese nicht durch ihre eigene Schwerkraft von dem Reibschweißdorn 38 abrutschen kann.

Anschließend wird der Reibschweißdorn 38a bzw. das Reibschweißwerkzeug 38 mit einer translatorischen Bewegung in Richtung der Ausnehmung 26 bewegt. Dabei wird die Kontakthülse 28 in die Ausnehmung 26 eingeführt.

Durch den Flansch, der durch den zweiten Abschnitt 28b gebildet ist, kommt die Kontakthülse 28 in einer gewissen Einschubtiefe in der Ausnehmung 26 zu einer Endposition. In dieser Endposition liegt der Flansch des Abschnittes 28b an der Oberfläche der Hülse 10 an.

Anschließend wird der Reibschweißdorn 38a in Rotation versetzt, wobei gleichzeitig eine Anpresskraft in Richtung der Achse X auf die Oberfläche der Hülse 10 ausgeübt wird. Durch die Rotation und die Anpresskraft wird die Kontakthülse 28 mit der Hülse 10 verschweißt. Dies ist in Fig. 11b gezeigt.

Anschließend kann ein Kontaktteil, z.B. ein Anschlussbolzen durch die Durchgangsöffnung 30 geschoben werden und mit der Kontakthülse verbunden werden. Dabei kann das Kontaktteil in der Durchgangsöffnung 30 verschraubt werden, klemmend in der Durchgangsöffnung 30 befestigt werden oder stoffschlüssig mit der Kontakthülse 28 in der Durchgangsöffnung 30 verbunden werden.

Figur 12 zeigt eine Ansicht solche Verbindung. Ein Anschlussbolzen 42 ist über die Kontakthülse 28 mit der Hülse 10 und dem Leiter 4 verbunden. Zusätzlich zu dem Anschlussbolzen 42 ist in der Fig. 12 eine Sicherungsbox 44 dargestellt. Die Sicherungsbox 44 ist über einen elektrischen Leiter mit dem Bolzen 42 verbunden. Der elektrische Leiter wird an den Bolzen 42 beispielsweise angeschraubt oder verklemmt und bietet somit eine elektrische Verbindung mit dem Leiter 4. Das elektrische Potential des Leiters 4 ist somit in der Sicherungsbox 30 abgreifbar und von dort können Abgänge zu den Verbrauchern abzweigen.

Mit Hilfe der gezeigten Anschlusskonsole ist ein besonders einfacher elektrischer Abgriff einer Energieleitung möglich. Die Energieleitung als solche wird elektrisch kaum beeinflusst und deren Leitungswiderstand bleibt im Wesentlichen unbeeinflusst von der Anzahl der Anschlusskonsolen. Ferner können die Anschlusskonsolen an den gewünschten Positionen entlang der Leitung vorgesehen werden, so dass eine dezentrale Verteilung der Energie im Bordnetz möglich ist. Mehrere Sicherungsboxen und Abgänge können je nach Notwendigkeit an unterschiedlichen Stellen innerhalb des Fahrzeugs in besonders einfacher Weise mit der Energieleitung verbunden werden. Eine Konfektionierung des Kabels ist somit individuell anpassbar und wird somit einem jeweiligen Fahrzeugtyp gerecht.

## Patentansprüche

1. Elektrische Anschlusskonsole für ein Kraftfahrzeugbordnetz umfassend,
- ein Kabel (2) mit einem metallischen Litzenleiter (4), und
- einen mit dem Litzenleiter (4) elektrisch und mechanisch verbundenen elektrischen Abgriff, wobei
- der Abgriff aus einer metallischen Hülse (10) gebildet ist,
- die Hülse (10) in einem Anschlussbereich (8) des Litzenleiters (4) mit dem Litzenleiter (4) verbunden ist ,
- die Hülse (10) eine Längserstreckung in Längsachse parallel zu einer Längsachse des Litzenleiters (4) hat und
- die Hülse (10) eine Ausnehmung (26) aufweist, deren Längsachse quer zu Längsachse der Hülse (10) verläuft,
**dadurch gekennzeichnet, dass**
- in der Ausnehmung (26) eine Kontakthülse (28) angeordnet ist,
- dass die Kontakthülse (28) stoffschlüssig mit der Hülse (10) verbunden ist,
- dass die Kontakthülse (28) stoffschlüssig mit dem Litzenleiter verbunden ist, und
- dass die Kontakthülse (28) eine Durchgangsöffnung (30) aufweist.

2. Elektrische Anschlusskonsole nach Anspruch 1,
**dadurch gekennzeichnet,**
- **dass** die Hülse (10) im Anschlussbereich (8) derart verpresst ist, dass die Hülse (10) zwei im Wesentlichen parallel zueinander verlaufende Kontaktflächen aufweist und dass die Ausnehmung (26) zwischen den Kontaktflächen verläuft.

3. Elektrische Anschlusskonsole nach Anspruch 2,
**dadurch gekennzeichnet,**
- **dass** zumindest eine Kantenlänge der verpressten Hülse (10) größer als der Durchmesser des Litzenleiters (4), insbesondere größer als der Durchmesser des Kabels (2) ist.

4. Elektrische Anschlusskonsole nach einem der vorangehenden Ansprüche 2 oder 3,
**dadurch gekennzeichnet,**
**dass** die verpresste Hülse (10) eine quadratische oder rechteckige Form hat.

5. Elektrische Anschlusskonsole nach Anspruch 4,
**dadurch gekennzeichnet,**
- **dass** ein Anschlussbolzen (42) in der Durchgangsöffnung (30) angeordnet ist.

6. Elektrische Anschlusskonsole nach einem der vorangehenden Ansprüche,
**dadurch gekennzeichnet,**
**dass** die Kontakthülse (28) aus zumindest zwei Abschnitten gebildet ist, die in axialer Richtung der Kontakthülse (28) nebeneinander angeordnet sind, wobei ein erster Abschnitt einen ersten Außenumfang aufweist und ein zweiter Abschnitt einen zweiten, größeren als den ersten Außenumfang aufweist.

7. Elektrische Anschlusskonsole nach Anspruch 6,
**dadurch gekennzeichnet,**
**dass** der zweite Abschnitt als Flansch, insbesondere mit einem radial auskragenden Kragen gebildet ist, dass der Flansch an einer Kontaktfläche der Hülse (10) anliegt, insbesondere dass der Flansch mit der Hülse (10) stoffschlüssig verschweißt ist.

8. Elektrische Anschlusskonsole nach einem der vorangehenden Ansprüche 6 oder 7,
**dadurch gekennzeichnet,**
**dass** der erste Abschnitt stoffschlüssig mit den Litzen des Litzenleiters (4) reibgeschweißt ist.

9. Elektrische Anschlusskonsole nach einem der vorangehenden Ansprüche,
**dadurch gekennzeichnet,**
**dass** das Kabel (2) eine Isolation (6) des Litzenleiters (4) aufweist, dass der Anschlussbereich (8) in einem zwischen zwei Isolationsabschnitten der Isolation (6) angeordneten, abisolierten Bereich angeordnet ist und dass die Hülse (10) in dem Anschlussbereich (8) mit dem Litzenleiter (4) stoffschlüssig verbunden ist.

10. Elektrische Anschlusskonsole nach Anspruch 9,
**dadurch gekennzeichnet,**
- **dass** in den Isolationsabschnitten die Isolation (6) den Litzenleiter (4) vollständig umschließt.

11. Elektrische Anschlusskonsole nach einem der vorangehenden Ansprüche,
**dadurch gekennzeichnet,**
- **dass** der Litzenleiter (4) ein Rundleiter ist und/oder dass der Litzenleiter (4) aus Aluminium oder einer Legierung davon gebildet ist.

12. Elektrische Anschlusskonsole nach einem der vorangehenden Ansprüche,
**dadurch gekennzeichnet,**
- **dass** die Hülse (10), in Teilen ein Anschlussbolzen (12) und der Litzenleiter (4) mit einer Isolation (6), insbesondere bis über die Isolation (6) des Litzenleiters (4) hinaus ummantelt, vorzugsweise umspritzt sind.

## Claims

1. Electrical connection console for a motor vehicle board net comprising,
- a cable (2) with a metallic stranded conductor (4), and
- an electrical tap electrically and mechanically connected with the stranded conductor (4), wherein
- the tap is formed from a metallic sleeve (10),
- the sleeve (10) is connected with the stranded conductor (4) in a connection region (8) of the stranded conductor (4),
- the sleeve (10) has a longitudinal extension in a longitudinal axis parallel to a longitudinal axis of the stranded conductor (4), and
- the sleeve (10) has a recess (26), of which the longitudinal axis is oriented transversely to the longitudinal axis of the sleeve (10),
**characterized in**
- **that** a contact sleeve (28) is arranged in the recess (26),
- **that** the contact sleeve (28) is materially bonded to the sleeve (10),
- **that** the sleeve (10) is materially bonded to the stranded conductor (4) and
- **that** the contact sleeve (28) has a through-opening (30).

2. Electrical connection console according to claim 1,
**characterized in**
- **that** the sleeve (10) is compressed in the connection region (8) in such a way that the sleeve (10) has two contact surfaces running essentially parallel to one another and that the recess (26) extends between the contact surfaces.

3. Electrical connection console according to claim 2,
**characterized in**
- **that** at least one edge length of the compressed sleeve (10) is greater than the diameter of the stranded conductor (4), in particular greater than the diameter of the cable (2).

4. Electrical connection console according to one of the preceding claims 2 or 3,
**characterized in**
**that** the compressed sleeve (10) has a square or rectangular shape.

5. Electrical connection console according to claim 4,
**characterized in**
- **that** a connecting bolt (42) is arranged in the through-opening (30).

6. Electrical connection console according to one of the preceding claims,
**characterized in**
**that** the contact sleeve (28) is formed from at least two sections which are arranged next to one another in the axial direction of the contact sleeve (28), wherein a first section has a first outer circumference and a second section has a second outer circumference which is larger than the first outer circumference.

7. Electrical connection console according to claim 6,
**characterized in**
**that** the second section is formed as a flange, in particular with a radially projecting collar, that the flange lies against a contact surface of the sleeve (10), in particular in that the flange is welded to the sleeve (10) in a material bond.

8. Electrical connection console according to one of the preceding claims 6 or 7,
**characterized in**
**that** the first section is connected to the strands of the stranded conductor (4) in a material bond, in particular friction-welded.

9. Electrical connection console according to one of the preceding claims,
**characterized in**
**that** the cable (2) has an insulation (6) of the stranded conductor (4), that the connection region (8) is arranged in a stripped region arranged between two insulation sections of the insulation (6), and that the sleeve (10) is materially bonded to the stranded conductor (4) in the connection region (8).

10. Electrical connection console according to claim 9,
**characterized in**
- **that** the insulation (6) completely encloses the stranded conductor (4) in the insulation sections.

11. Electrical connection console according to one of the preceding claims,
**characterized in**
- **that** the stranded conductor (4) is a round conductor and/or that the stranded conductor (4) is formed from aluminium or an alloy thereof.

12. Electrical connection console according to one of the preceding claims,
**characterized in**
- **that** the sleeve (10), in parts a connecting bolt (12) and the stranded conductor (4) are sheathed, preferably overmoulded, with an insulation (6), in particular up to beyond the insulation (6) of the stranded conductor (4).

## Revendications

1. Console de raccordement électrique pour un réseau de bord de véhicule automobile, comprenant
- un câble (2) avec un conducteur métallique toronné (4), et
- une prise électrique reliée électriquement et mécaniquement au conducteur toronné (4), où
- la prise est formée d'une douille métallique (10),
- la douille (10) est reliée au conducteur toronné (4) dans une zone de raccordement (8) du conducteur toronné (4),
- la douille (10) s'étend longitudinalement dans un axe longitudinal parallèle à un axe longitudinal du conducteur toronné (4), et
- la douille (10) a un évidement (26) dont l'axe longitudinal s'étend transversalement à l'axe longitudinal de la douille (10),
**caractérisée en ce**
- **qu'**une douille de contact (28) est disposée dans l'évidement (26),
- **que** la douille de contact (28) est reliée par adhérence de matière à la douille (10),
- **que** la douille de contact (28) est reliée par adhérence de matière au conducteur toronné, et
- **que** la douille de contact (28) a une ouverture de passage (30).

2. Console de raccordement électrique selon la revendication 1,
**caractérisée en ce**
- **que** la douille (10) est pressée dans la zone de raccordement (8) de telle sorte que la douille (10) a deux surfaces de contact s'étendant essentiellement parallèlement l'une à l'autre et que l'évidement (26) s'étend entre les surfaces de contact.

3. Console de raccordement électrique selon la revendication 2,
**caractérisée en ce**
- **qu'**au moins une longueur d'arête de la douille pressée (10) est supérieure au diamètre du conducteur toronné (4), en particulier supérieure au diamètre du câble (2).

4. Console de raccordement électrique selon l'une des revendications 2 ou 3 précédentes, **caractérisée en ce**
**que** la douille pressée (10) a une forme carrée ou rectangulaire.

5. Console de raccordement électrique selon la revendication 4, **caractérisée en ce que**
- un boulon de raccordement (42) est disposé dans l'ouverture de passage (30).

6. Console de raccordement électrique selon l'une des revendications précédentes, **caractérisée en ce que** la douille de contact (28) est formée d'au moins deux sections qui sont disposées l'une à côté de l'autre dans la direction axiale de la douille de contact (28), où une première section a un premier pourtour extérieur et une deuxième section a un deuxième pourtour extérieur plus grand que le premier.

7. Console de raccordement électrique selon la revendication 6, **caractérisée en ce que** la deuxième partie est formée comme une bride, en particulier avec un collet en saillie radiale, que la bride repose sur une surface de contact de la douille (10), en particulier que la bride est soudée par adhérence de matière à la douille (10).

8. Console de raccordement électrique selon l'une des revendications 6 ou 7 précédentes, **caractérisée en ce que** la première section est soudée par friction avec les torons du conducteur toronné (4).

9. Console de raccordement électrique selon l'une des revendications précédentes, **caractérisée en ce que** le câble (2) a une isolation (6) du conducteur toronné (4), que la zone de raccordement (8) est disposée dans une zone dénudée située entre deux sections d'isolation de l'isolation (6) et que la douille (10) est reliée par adhérence de matière au conducteur toronné (4) dans la zone de raccordement (8).

10. Console de raccordement électrique selon la revendication 9, **caractérisée en ce que**
- dans les sections d'isolation, l'isolation (6) entoure complètement le conducteur toronné (4).

11. Console de raccordement électrique selon l'une des revendications précédentes,
**caractérisée en ce que**
- le conducteur toronné (4) est un conducteur rond et/ou que le conducteur toronné (4) est constitué d'aluminium ou d'un alliage de celui-ci.

12. Console de raccordement électrique selon l'une des revendications précédentes,
**caractérisée en ce que**
- que la douille (10), en partie un boulon de raccordement (12) et le conducteur toronné (4) avec une isolation (6), en particulier au-delà de l'isolation (6) du conducteur toronné (4), sont enveloppés, de préférence surmoulés.
